(19) Europäisches Patentamt
European Patent Office
Office européen des brevets

(11) **EP 1 513 714 B1**

(12) **FASCICULE DE BREVET EUROPEEN**

(45) Date de publication et mention
de la délivrance du brevet:
**23.02.2011 Bulletin 2011/08**

(21) Numéro de dépôt: **03760757.9**

(22) Date de dépôt: **20.06.2003**

(51) Int Cl.:
*B60T 7/00* (2006.01)     *B60T 7/12* (2006.01)
*B60T 13/74* (2006.01)     *B60W 10/06* (2006.01)
*B60W 10/18* (2006.01)     *B60W 30/18* (2006.01)

(86) Numéro de dépôt international:
**PCT/FR2003/001897**

(87) Numéro de publication internationale:
**WO 2004/000622 (31.12.2003 Gazette 2004/01)**

(54) **DISPOSITIF ET PROCEDE DE DESSERRAGE AUTOMATIQUE DU FREIN DE PARKING AUTOMATIQUE AU DEMARRAGE**

VERFAHREN UND VORRICHTUNG ZUR AUTOMATISCHEN FREIGABE DER AUTOMATISCHEN FESTSTELLBREMSE

METHOD AND DEVICE FOR AUTOMATICALLY RELEASING THE AUTOMATIC PARKING BRAKE WHEN STARTING

(84) Etats contractants désignés:
**AT BE BG CH CY CZ DE DK EE ES FI FR GB GR HU IE IT LI LU MC NL PT RO SE SI SK TR**

(30) Priorité: **20.06.2002 FR 0207623**

(43) Date de publication de la demande:
**16.03.2005 Bulletin 2005/11**

(73) Titulaire: **RENAULT S.A.S.**
**92100 Boulogne Billancourt (FR)**

(72) Inventeurs:
• **DEPREZ, Philippe**
**F-78000 Versailles (FR)**
• **DEVAUD, Emmanuel**
**F-92140 Clamart (FR)**
• **PLANCHON, Philippe**
**F-75008 Paris (FR)**
• **SPOORMANS, Thomas**
**F-75116 Paris (FR)**

(74) Mandataire: **Religieux, Vincent**
**Renault Technocentre**
**Sce 00267 - TCR GRA 2 36**
**1, avenue du Golf**
**78288 Guyancourt Cedex (FR)**

(56) Documents cités:
WO-A-89/01887     DE-A- 1 580 720
DE-A- 19 849 799     DE-A- 19 912 878
DE-A- 19 931 345     GB-A- 2 342 967

EP 1 513 714 B1

**Description**

La présente invention concerne un procédé et un dispositif de desserrage automatique du frein de parking automatique au démarrage.

Dans l'état de la technique, on a déjà proposé de réaliser des freins de parking électriques qui remplacent les freins de parking manuels, voir par exemple WO-A-89/01887.

Le frein de parking électrique est associé à un calculateur qui permet, en fonction de divers signaux de fonctionnement du véhicule, de réaliser son desserrage automatique sans intervention directe du conducteur.

Dans l'état de la technique, on a aussi proposé un système d'assistance au démarrage en côte, utilisant le frein de parking automatique, et qui se fonde sur la détection notamment du degré de l'enfoncement de la pédale de l'embrayage pour en déduire le couple moteur disponible à la roue d'une part, et d'autre part à l'intention du conducteur de réaliser un décollage du véhicule alors que ce dernier, est maintenu dans la pente par l'actionnement du frein de parking automatique.

Le système ci-dessus fonctionne de manière correcte. Cependant, les inventeurs ont constaté que la solution présentait un certain coût qu'il convenait de réduire. Ils se sont rendus compte que la suppression du capteur de position de la pédale d'embrayage est un moyen qui permet de réduire ce coût.

Dans le même ordre d'idées, dans la solution précédemment développée, l'utilisation de l'information de la position de la pédale d'embrayage doit être transformée en une valeur de couple transmis à la roue, ce qui complique notablement les moyens de calcul du contrôleur de desserrage du frein de parking automatique lorsque ce dernier travaille en assistance de démarrage en côte.

Pour porter remède à ces inconvénients de l'état de la technique, la présente invention concerne un procédé d'assistance au démarrage d'un véhicule comportant un groupe motopropulseur et un Frein de Parking Automatique équipé d'un moyen pour exécuter un ordre de desserrage ou de désactivation du frein de parking. Le procédé de l'invention consiste à exécuter, au moins après une phase de démarrage du groupe motopropulseur :

- Une étape d'estimation d'une valeur de couple transmis qui équilibre le véhicule dans la pente ;
- Une boucle consistant à exécuter un calcul incrémental d'une estimation du couple transmis réellement à l'instant donné tant que l'estimation du couple transmis réellement est insuffisante à surpasser l'estimation de couple transmis ; puis
- Une étape de production d'un ordre dé desserrage ou de désactivation du Frein de Parking Automatique.

Selon un aspect du procédé, l'étape d'estimation d'une valeur de couple transmis qui équilibre le véhicule dans la pente comporte une étape pour calculer un modèle statique du véhicule dans la pente à partir d'une mesure d'un angle d'inclinaison délivrée par un capteur de pente et de la connaissance d'une valeur déterminée représentative du rapport de transmission.

Selon un aspect du procédé, la mesure d'un angle d'inclinaison étant inférieure à un seuil donné, l'estimation d'une valeur de couple transmis qui équilibre le véhicule dans la pente est augmentée d'une valeur déterminée.

Selon un aspect du procédé, la valeur déterminée d'augmentation de l'estimation d'une valeur de couple transmis - qui équilibre le véhicule dans la pente dépend de la mesure de l'angle d'inclinaison.

Selon un aspect du procédé, l'étape de calcul incrémental comporte :

- une étape de lecture d'une valeur de couple moyen efficace associée à l'état dynamique du groupe motopropulseur ;
- une étape de lecture d'une valeur de régime du moteur;
- une étape de calcul de la dérivée temporelle du régime moteur ;
- une étape de détermination du moment d'inertie du groupe motopropulseur et de calcul du couple résistant sous la forme d'un produit du moment d'inertie du groupe motopropulseur par la dérivée temporelle du régime moteur ;

- une étape de détermination d'une estimation de couple transmis selon une relation de la forme :

$$ECT = Cme - Jmot \times \frac{dWm}{dt}.$$

Selon un aspect du procédé, il est prévu une étape de re synchronisation de la lecture d'une valeur de couple moyen efficace et d'une valeur de régime du moteur de sorte que chaque couple de valeurs (Cme, Wm) corresponde à un même intervalle de temps.

Selon un aspect du procédé, il est prévu de rajouter un délai prédéterminé, préférentiellement égal à trois périodes de passage au Point Mort Haut du moteur thermique du groupe motopropulseur, sur la valeur de re-synchronisation de la valeur de couple moyen estimé pour tenir compte notamment du délai d'attente de remplissage du collecteur et de l'exécution de l'allumage.

Selon un aspect du procédé, l'étape de re synchronisation consiste à appliquer la re synchronisation sur la valeur dérivée D_Wm du régime moteur Wm entre deux échantillons séparés par une durée de re synchronisation notamment selon la relation : D_Wm = [Wm(8)-Wm(1)]/durée, dans laquelle « durée » détermine la période de re synchronisation et Wm(1) et Wm(8) les valeurs de début et de fin de période de re synchronisation.

Selon un aspect du procédé, l'étape d'estimation de couple transmis (ECT) comporte la comparaison d'une valeur d'estimation de couple transmis (ECT) à une valeur prédéterminée de seuil (ECTseuil) de sorte que si le seuil est dépassé un test d'un compteur incrémenté lors de chaque étape d'estimation de couple transmis (ECT) par rapport à un seuil prédéterminé (Smin_loop_Delay), de sorte que si le seuil sur le compteur est dépassé un ordre d'autorisation de desserrage du Frein de Parking Automatique soit généré.

Selon un aspect du procédé, l'étape d'estimation de couple transmis ECT comporte de plus une étape de décalage prédéterminé de façon à réduire l'effet perturbateur de la mise en marche et de l'arrêt de certains consommateurs secondaires (Consommateurs) d'énergie ou de puissance fournie par le moteur thermique, en effectuant l'opération :

$$\text{ECT\_Corr\_k = ECT\_k + g(Consommateurs)}$$

de sorte que soit déterminée la plage dans laquelle le moteur peut être considéré comme au repos et la plage pendant laquelle un décalage g(Consommateurs) sur l'estimation de couple transmis peut être réalisé. Selon l'invention, quatre critères ou tests sont réalisés simultanément pour parvenir à un tel décalage.

Selon un aspect du procédé, le décalage est effectué à l'issue d'un test au cours duquel quatre conditions sont combinées :

$$\text{Wm} \leq \text{Smax\_Wm\_idle}$$

$$\text{ABS(D\_Wm)} \leq \text{Smax\_D\_M\_idle}$$

$$\text{THETA\_Acc} \leq \text{Smax\_acc\_idle}$$

$$\text{D\_Acc} \leq 0.$$

Conditions dans lesquelles :

Smax_Wm_idle représente une valeur de seuil en dessous de laquelle le régime moteur indique que le moteur est en état de repos ou régime de ralenti ;
Smax_D_M_idle représente une valeur de seuil en dessous de laquelle la valeur absolue ABS(D_Wm) de la dérivée temporelle du régime moteur D_Wm indique que le moteur est en état de repos ou régime de ralenti ;
Smax_acc_idle représente une valeur de seuil en dessous de laquelle le degré d'enfoncement de la pédale d'accélérateur THETA_Acc indique que le moteur est en état de repos ou régime de ralenti ;
D_Acc représente la dérivée temporelle du degré d'enfoncement THETA_Acc de la pédale d'accélérateur qui est négative lorsque le conducteur relève le pied de la pédale d'accélérateur ;
de sorte que si le test est négatif, le contrôle retourne à l'initialisation d'un compteur CPTR, le groupe motopropulseur étant réputé non connecté aux roues motrices. ;
et de sorte que si le test est positif, le contrôle passe à un test où on regarde si le compteur CPTR est inférieur à une valeur de seuil CPTR_seuil prédéterminée ;
de sorte que si le test est positif, le contrôle passe à une étape au cours de laquelle une valeur de décalage « offset », initialement nulle lorsque le compteur CPTR est lui-même initialisé à l'étape, est augmentée de la valeur de l'estimation ECT en cours ;

puis, la valeur de compteur CPTR étant incrémentée d'un pas lors d'une étape et le contrôle retourne à l'étape de test ; de sorte que si le test est négatif, la valeur offset est transmise à une routine de calcul d'une valeur de décalage de l'estimation de couple transmis ECT, valeur de décalage notée « offset_ECT » qui est égal au rapport de la valeur « offset » calculée lors de l'étape avec la valeur CPTR du compteur qui vaut, à ce moment là, CPTR_seuil.

Selon un aspect du procédé, une étape est exécutée pour produire une information d'activité du conducteur de sorte que soit refusé le desserrage du Frein de Parking Automatique en cas de remontée de la pédale d'accélérateur.

Selon un aspect du procédé, une étape est exécutée pour détecter une demande de démarrage alors que le groupe motopropulseur n'est pas embrayé.

Selon un aspect du procédé, l'étape consiste, sans utiliser de capteur d'enfoncement de la pédale d'embrayage, à détecter l'état embrayé à l'aide de deux cartographies de l'estimation de couple transmis en fonction du degré d'enfoncement de la pédale d'accélérateur respectivement établies lorsque les roues sont embrayées et lorsque les roues ne sont pas embrayées et en comparant la valeur de l'estimation de couple transmis à chacune des valeurs de cartographies adressées par la mesure du degré d'enfoncement de la pédale d'accélérateur pour si la comparaison à la première cartographie est positive produire une information caractéristique d'un état débrayé et si la comparaison à la seconde cartographie est positive produire une information caractéristique d'un état embrayé.

Selon un aspect du procédé, l'étape consiste, en utilisant un capteur d'enfoncement de la pédale d'embrayage en tout ou rien, à produire une information caractéristique d'un état embrayé ou débrayé.

Selon un aspect du procédé, une étape pour détecter le régime à vide consiste à :

- comparer l'information de couple moteur estimé Cme à deux fonctions d'estimation de régime à vide en rotation positive fp() et en rotation négative fn() ;
- à appliquer à la fonction fp() un gain G_Cme_PV à vide appliqué sur le couple moteur estimé Cme, un décalage Offset_Cme_PV sur la valeur de couple moteur estimé en position à vide, et la valeur en cours Cme pour produire une valeur de régime à vide en rotation positive a priori ;
- à appliquer à la fonction fn() un gain G_Cme_NV à vide appliqué sur le couple moteur estimé Cme, un décalage Offset_Cme_NV sur la valeur de couple moteur estimé en position à vide, et la valeur en cours Cme pour produire une valeur de régime à vide en rotation négative a priori ;
- à comparer la valeur du régime moteur (Wm) pour déterminer si on se trouve dans un régime à vide positif ou négatif ;
- à autoriser le desserrage du Frein de Parking Automatique seulement si aucun régime à vide n'est détecté.

Selon un aspect du procédé, une étape de détection de saturation du moteur thermique à haut régime est exécutée de sorte que soit interdit le desserrage du frein de Parking Automatique en régime de saturation.

Selon un aspect du procédé, une étape pour produire un service de démarrage « à plat »sans seuil sur l'appui de la pédale d'accélérateur consiste :

- à produire un ordre de desserrage du frein de parking sur la seule détermination que l'estimation de couple transmis ECT est supérieure au seuil prédéterminé ECTseuil et, particulièrement sans tester un seuil sur l'appui de la pédale d'accélérateur ;
- à initialiser une variable d'état lors du démarrage du véhicule pour indiquer que la pédale d'accélérateur n'a pas encore été enfoncée, la variable étant représentée par Acc_Was_NonZero = 0 ;
- à lire une variable représentative de l'état de repos du moteur (Repos) ;
- à traiter la variable Acc_Was_NonZero de sorte qu'elle reste à « 1 » dès que l'accélérateur a été appuyé et jusqu'à ce que la variable Repos retourne à « 1 » ;

et consiste alors à autoriser le démarrage « à plat » quand la variable Acc_Was_NonZero vaut « 0 » et à tester que l'estimation de couple transmis ECT est supérieure à une valeur de seuil ECTSeuil pour autoriser le desserrage du Frein de Parking Automatique et ainsi assurer le décollage du véhicule en le retenant sur une certaine plage d'accélération.

Selon un aspect du procédé, le service de démarrage « à plat » est étendu à un service de démarrage en descente, première vitesse engagée.

Selon un aspect du procédé, le service de démarrage « à plat » est étendu à un service de démarrage en descente, rapport de marche arrière engagé.

Selon un aspect du procédé, une étape de détection d'un excès de tangage et une étape pour interdire le desserrage du Frein de Parking Automatique en situation de démarrage si le tangage du véhicule appliqué par exemple par un mouvement trop important des passagers du véhicule dépasse un certain seuil prédéterminé.

Selon un aspect du procédé, une étape pour déterminer un terme d'anticipation sur l'ordre de desserrage du Frein de Parking Automatique en fonction de valeurs prédéterminées d'anticipation qui consiste, lors de l'élaboration de l'ordre de desserrage du Frein de Parking Automatique, à exécuter aussi une étape de mesure du degré d'enfoncement de la pédale d'accélérateur Teta_Acc, puis à mesurer une dérivée temporelle du signal Teta_Acc de degré d'enfoncement, soit D_Acc, et à comparer cette valeur instantanée de dérivée D_Acc avec un seuil prédéterminé Seuil_ Anticipe, de sorte que si la vitesse de variation du degré d'enfoncement D_Acc est supérieure à une valeur Seuil_Anticipe, la boucle d'incrémentation de la valeur d'estimation de couple transmis ECT soit interrompu avant que le test soit vrai et pour produire de manière anticipée l'ordre de desserrage du Frein de Parking Automatique.

L'invention concerne aussi un dispositif d'assistance au démarrage en côte d'un véhicule comportant un groupe motopropulseur et un Frein de Parking Automatique équipé d'un moyen pour exécuter un ordre de desserrage ou de désactivation du frein de parking. Le dispositif de l'invention comporte essentiellement un calculateur d'un ordre de desserrage connecté à un capteur du degré de pente dans laquelle se trouve engagé le véhicule et à un capteur délivrant une information sur le régime ou vitesse de rotation du groupe motopropulseur du véhicule.

L'invention se caractérise par le fait que le calculateur comporte un moyen d'estimation du couple transmis connecté à une première entrée d'un moyen de comparaison dont une seconde entrée est connectée à un moyen pour produire une valeur de seuil de couple transmis correspondant au maintien du véhicule, de sorte qu'une borne de sortie dudit moyen de comparaison produise un ordre de desserrage à destination du frein de parking électrique selon le procédé de l'invention.

D'autres caractéristiques et avantages de l'invention seront mieux compris à l'aide de la description et des figures annexées qui sont :

- la figure 1 : un schéma bloc représentant un dispositif selon l'invention ;
- la figure 2 : un organigramme représentant les étapes principales du procédé de l'invention ;
- les figures 3 à 5 : des diagrammes expliquant un mode de réalisation permettant de préparer le calcul d'une estimation du couple transmis ;
- les figures 6 et 7 : des moyens permettant d'élaborer un ordre de desserrage du frein de parking électrique ;
- les figures 8 et 9 : un moyen pour traiter l'estimation du couple transmis générée selon l'enseignement de l'invention ;
- la figure 10 : un moyen permettant de détecter un abandon de tentative de démarrage en côte par le conducteur ;
- la figure 11 : un moyen permettant de prendre en compte le comportement de divers conducteurs sur un véhicule donné ;
- la figure 12 : un moyen pour détecter un régime du moteur d'entraînement à vide ;
- la figure 13 un moyen pour détecter la saturation du régime.

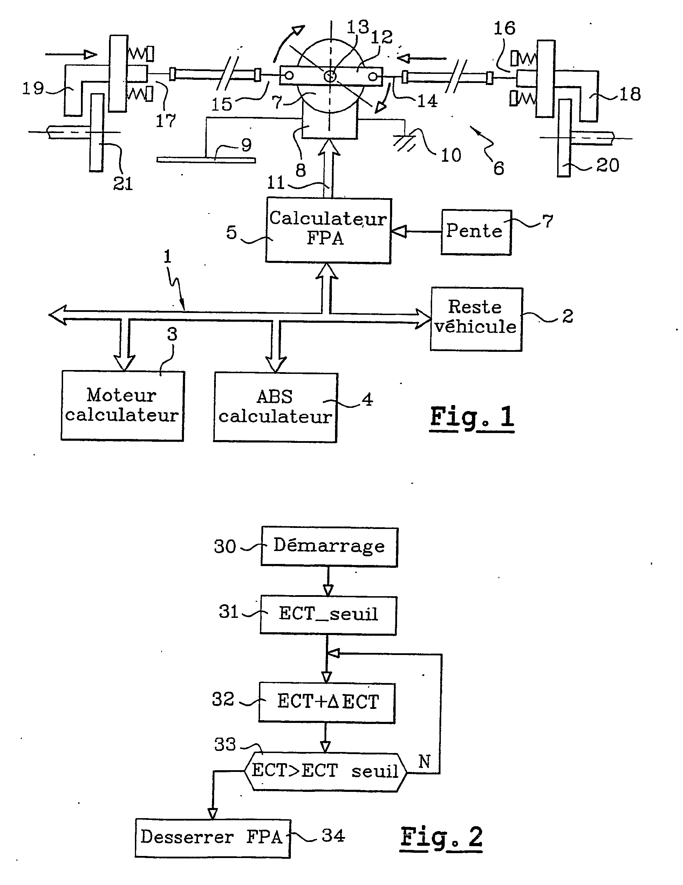

A la figure 1, on a représenté un dispositif d'assistance au démarrage en côte dans un mode de réalisation selon l'invention. Le véhicule sur lequel est installé le dispositif et le frein de parking électrique comporte un bus 1 sur lequel transitent des signaux provenant du reste du véhicule 2, d'un calculateur de contrôle du groupe motopropulseur 3 et d'un calculateur de contrôle du freinage 4, par exemple de type ABS™. Le bus 1 est un bus de la norme CAN™, dans un exemple de réalisation. Le groupe motopropulseur est composé d'un moteur thermique couplé à des roues motrices par un dispositif de transmission comportant une boîte de vitesses et un embrayage qui peut être commandé par un automatisme et/ou par le conducteur. Dans d'autres modes de réalisation, le groupe motopropulseur peut comporter une ou plusieurs machines électriques avec ou sans un moteur thermique.

Le dispositif d'assistance au démarrage en côte coopère avec un calculateur 5 de contrôle du Frein de Parking Automatique 6 qui est aussi connecté au bus 1. Le calculateur 5 de contrôle est équipé, ainsi qu'il est connu d'un moyen pour produire un ordre de serrage du Frein de Parking Automatique; d'un moyen pour produire un ordre de desserrage du Frein de Parking Automatique, lesdits ordres de serrage ou de desserrage étant générés sur une ligne de connexion 11 au Frein de Parking Automatique proprement dit. Le cas échéant, le calculateur 5 de contrôle est équipé aussi d'un moyen pour retourner sur le bus 1 du véhicule des informations d'état du Frein de Parking Automatique.

Le calculateur 5 de contrôle du Frein de Parking Automatique est connecté par une ligne convenable avec un capteur de pente 7. Dans d'autres modes de réalisation, une information sur le degré de pente étant disponible sur le bus 1, le capteur 7 est remplacé par un moyen équivalent qui prélève cette information sur le flux de données transitant sur le bus 1.

Le Frein de Parking Automatique utilisé dans l'invention comporte principalement un moteur électrique 7 qui est contrôlé par un contrôleur de moteur électrique 8 dont l'alimentation en énergie électrique est connectée au réseau de bord du véhicule 9 et à la masse électrique 10, et dont les paramètres de commande (courant, tension ou vitesse et couple) sont transmis par la ligne de commande 11 couplée au calculateur 5 de contrôle du Frein de Parking Automatique.

Le moteur électrique 7 coopère, ainsi qu'il est connu, avec un réducteur convenable (non représenté) qui entraîne un mécanisme 12 représenté schématiquement à la figure 1 sous la forme d'une barre montée sur l'arbre moteur 13, et dont les extrémités portent des câbles respectivement 14 et 15 qui sont connectés à leurs extrémités respectivement à un organe de commande de freinage 16 pour une roue droite et à un organe de commande de freinage 17 pour une roue gauche.

Lorsque le calculateur 5 de contrôle du Frein de Parking Automatique produit un ordre de serrage, un ordre d'activation du moteur électrique 7 est transmis par la ligne 11 au contrôleur 8 qui réalise une mise en rotation du moteur électrique 7, de sorte que le levier 12 tend les câbles 14 et 15 avec un effort de serrage déterminé.

Les parties mobiles 18 et 19 des freins 16 et 17 viennent serrer les disques 20 et 21 de sorte que le Frein de Parking Automatique soit serré.

Lorsque le calculateur 5 de contrôle du Frein de Parking Automatique produit sur la ligne 11 un ordre de desserrage du Frein de Parking Automatique, la rotation du moteur électrique 7 est conduite dans l'autre sens et les parties mobiles 18 et 19 des freins 16 et 17 sont relâchés.

En utilisant le dispositif de l'invention, lorsque le véhicule se trouve arrêté dans une rampe, le capteur de pente 7 délivre un signal représentatif du degré de pente dans laquelle est arrêté le véhicule.

Par ailleurs, en situation de démarrage en côte, le groupe motopropulseur du véhicule produit un couple qui est ou non transmis aux roues selon que l'embrayage est actif ou non et selon une fraction qui dépend de la position d'embrayage.

Ainsi qu'on le verra par la suite, le principe de l'invention consiste à déterminer une condition de desserrage du Frein de Parking Automatique de sorte que le calculateur 5 de contrôle du Frein de Parking Automatique, en fonction de la pente mesurée par le capteur 7 et en fonction du régime moteur présenté sur le bus 1, produise un ordre de desserrage du Frein de Parking Automatique de sorte que l'effet de pente étant équilibré par le couple moteur, le véhicule peut se trouver en situation de décollage dès que le seuil en est dépassé.

A la figure 2, on a représenté un organigramme représentatif des étapes principales du procédé d'assistance lors du démarrage en côté selon l'invention.

Dans une étape 30, on réalise une étape de démarrage du groupe motopropulseur, puis notamment lorsque le véhicule est à l'arrêt, Frein de Parking Automatique à l'état serré, une étape d'initialisation du calculateur 5 de contrôle du Frein de Parking Automatique.

Le contrôle passe ensuite à une étape 31 de détermination d'une estimation du couple transmis qui correspond au seuil à partir duquel le Frein de Parking Automatique peut être desserré sans que le véhicule subisse un mouvement de recul.

Le contrôle passe ensuite à une étape 32 au cours de laquelle est calculée une estimation du couple transmis à partir de l'instant de démarrage, d'une part, et un décalage ou augmentation de couple transmis qui permet d'équilibrer l'estimation de couple transmis de seuil et qui résulte à la fois de l'action d'accélération et de l'action d'embrayage dans le cas d'un véhicule classique à embrayage et pédale d'accélérateur, ou par des moyens équivalents dans les cas de véhicules d'autres types.

A cette fin, le contrôle passe à un test 33 où la nouvelle valeur d'estimation du couple transmis calculée lors de l'étape 32 est comparée à la valeur de seuil établie lors de l'étape 31. Si le test est positif, lors d'une étape 34, le calculateur 5 de contrôle du Frein de Parking Automatique est programmé pour produire un ordre de desserrage. Si le test est négatif, le calcul d'une nouvelle valeur de couple transmis estimée est exécuté lors de l'étape 32 et le test recommence en boucle.

On va maintenant détailler l'étape 31 de calcul d'une valeur de seuil sur l'estimation de couple transmis. Cette valeur de seuil est définie à partir d'un modèle statique du véhicule ainsi que sur l'idée que le rapport de transmission appliqué par le dispositif de transmission intercalé entre les roues et le groupe motopropulseur se trouve placé sur une valeur déterminée de rapport de transmission, comme une première vitesse R1 de boîte de vitesses à rapports étagés.

Dans d'autrés modes de réalisation, le dispositif d'assistance au démarrage en côte coopère avec un moyen de détection du rapport de transmission, et particulièrement pour une transmission à rapports étagés, un moyen de détection de la position du levier de vitesse, pour détecter si le véhicule se trouve placé en état de marche arrière ou dans d'autres rapports de transmission, ce qui permet d'augmenter la sensibilité du dispositif d'assistance en fonction de la détection de l'intention du conducteur, si l'on veut réaliser des démarrages dans d'autres rapports que le rapport de première.

En désignant par $\rho$ le rapport de transmission, R le rayon de la roue, $\alpha$ la pente dans laquelle se trouve le véhicule, M la masse du véhicule et g la constante de gravitation, la valeur de seuil de l'estimation de couple transmis est définie par un produit de termes de la forme :

$$ECT_{seuil} = M * g * \sin(\alpha) * \rho$$

La valeur de seuil ainsi calculée indique le couple qu'il est nécessaire d'appliquer à la roue de façon à maintenir en équilibre le véhicule dans la pente. Il est clair qu'à partir de cette valeur de seuil, toute augmentation du couple transmis permettrait un décollage du véhicule. Il est donc possible à partir de cette valeur de seuil produire un ordre de desserrage du frein de parking.

Le procédé et le dispositif d'assistance au démarrage en côte de l'invention permettent ainsi, par une estimation du couple transmis, de faire exécuter par le véhicule un démarrage en côte sans aucune intervention du conducteur sur la palette du frein de parking, d'une part, et sans aucun mouvement de recul du véhicule lors de ce démarrage, d'autre part.

Dans un mode de réalisation, on s'est aperçu que lorsque le capteur de pente produisait une valeur de degré de pente $\alpha$ très faible, c'est-à-dire quand la côte est très peu importante, le dispositif d'assistance trouve une valeur de seuil de l'estimation de couple de transmission $ECT_{seuil}$ très proche de 0, et le véhicule peut alors, lorsque le frein est desserré, se mettre en mouvement de manière parasite.

Pour éviter cette situation, on ajoute une valeur d'augmentation f qui dépend des valeurs de pente détectées et qui, lorsque les pentes sont faibles, permet d'augmenter la valeur de seuil de l'estimation de couple transmis. Dans ce mode de réalisation, le calculateur 5 comporte un moyen pour déterminer si le degré de pente est inférieur à une valeur donnée et, à la réponse positif de cette détermination, pour ajouter à la détermination du moyen déjà décrit de la valeur de seuil de l'estimation de couple transmis $ECT_{seuil}$, un terme déterminé en fonction du degré de pente $\alpha$, soit $f(\alpha)$. Dans un mode d'exécution, le module de calcul de la valeur de seuil de l'estimation de couple transmis comporte donc de plus une mémoire de cartographie, qui comporte une pluralité d'adresses, une pour chaque valeur discrète produite par un capteur de pente convenable, et chaque adresse contenant une valeur numérique représentative de la valeur supplémentaire à ajouter au seuil de couple transmis lorsque le degré de pente $\alpha$ est faible, et un module additionnant la dite valeur supplémentaire lue sur la mémoire de cartographie avec la valeur précédemment calculée à partir des données statiques représentatives de la statique du véhicule dans la pente et pour produire une valeur corrigée de l'estimation du seuil de couple transmis d'équilibre.

Dans un mode particulier de réalisation, le terme $f(\alpha)$ est aussi validé en dehors des faibles pentes pour ajouter de l'agrément de conduite et/ou de la sécurité. Son effet est alors de retenir un peu plus le véhicule lors du décollage.

Pour exécuter l'étape 32 du procédé de l'invention, le calculateur 5 de contrôle du Frein de Parking Automatique comporte :

- un premier module de lecture du couple moyen efficace Cme qui est fourni par le calculateur du moteur 3 sous forme d'une information circulant sur le bus 1 du véhicule,
- un deuxième module de lecture de la vitesse instantanée Wm de rotation du moteur thermique qui est fourni par le calculateur du moteur 3 sous forme d'une information circulant sur le bus 1 du véhicules

- un troisième module permettant de calculer la dérivée temporelle $\dfrac{dWm}{dt}$ de la vitesse de rotation à la sortie du groupe motopropulseur à partir de la donnée de la vitesse de rotation ou régime moteur prélevé par le deuxième module ;
- un quatrième module pour calculer le produit d'une valeur du moment d'inertie Jmot caractéristique de l'inertie du moteur ainsi que la valeur de sortie dudit troisième module ;
- un cinquième module pour soustraire la valeur de sortie du
- quatrième module, présentée à une entrée de soustraction du cinquième module, de la valeur de sortie du dit premier module de sorte qu'à sa sortie soit présentée une valeur instantanée de l'estimation de couple transmis instantanée produite selon une relation : $ECT = Cme - Jmot \times \dfrac{dWm}{dt}$

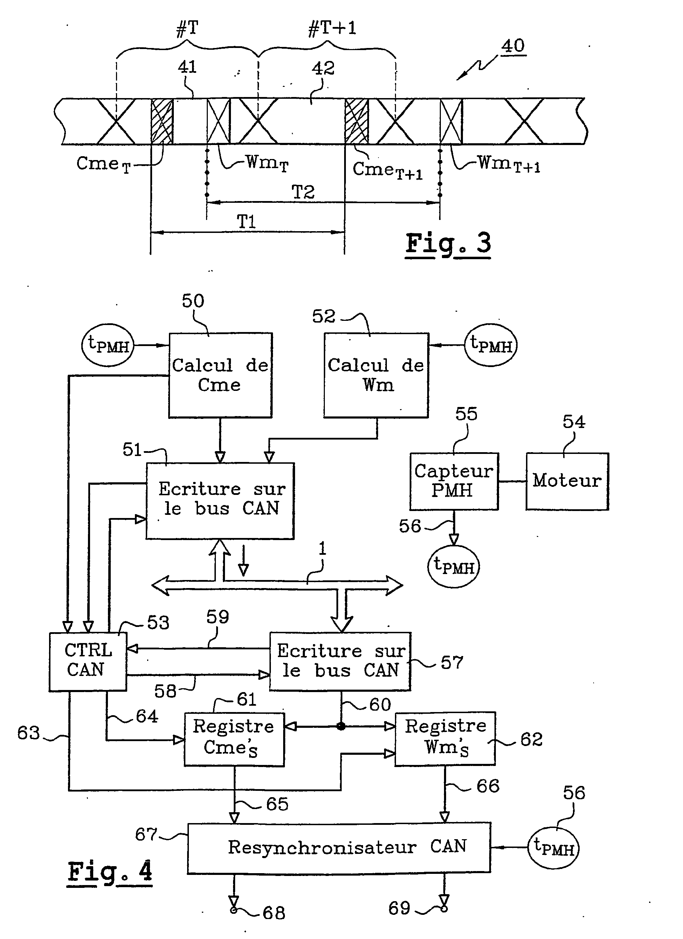

A la figure 3, on a représenté un schéma explicatif d'une cause d'erreur sur l'estimation du couple transmis et sur le régime moteur.

Dans la partie supérieure de la figure 3, on a représenté un chronogramme 40 représentant des trames successives 41 et 42 correspondant à des périodes référencées #T et #T+1. A la fin de chacune de ces trames, une ensemble de données transmises sont disponibles sur les divers récepteurs.

Dans chaque trame, les données membres sont structurées selon un protocole enregistré par un circuit contrôleur de protocole sur le bus CAN, en mots numériques représentatifs de valeurs de paramètres transmis sur le bus et insérés avec des phases et des périodicité diverses.

Ainsi, dans l'exemple illustré à la figure 3, lors de trame 41 de la période #T, une premier mot $Cme_T$ d'une première variable transmise et un second mot $Wm_T$ d'une seconde variable transmise seront tous les deux disponibles à la fin de la trame #T. Mais, à cause de périodes T1 et T2 pour le premier et le second mots transmis différentes et/ou supérieures à la période de la trame, ou encore parce que cette dernière varie, seul le premier mot $Cme_{T+1}$ est disponible à la fin de la trame #T+1. Le second mot prévu à la trame T+1 est reçu lors d'une trame ultérieure 43 sous le mot $Wm_{T+1}$.

Dans l'invention, il est nécessaire que le calculateur 3 de contrôle du groupe motopropulseur (voir Figure 2)

produise :

➟ une valeur estimée du couple moyen estimé, inscrite sous la forme d'un mot numérique Cme sur le bus CAN ; et
➟ une valeur du régime moteur inscrite sous forme d'un autre mot numérique Wm sur le bus CAN.

Du fait des mécanismes de production de chacune de ces deux valeurs, et du fait des occupations de la trame de transmission selon le protocole de bus CAN il en résulte que, à une date t déterminée, le calculateur de contrôle du Frein de Parking Automatique FPA 5 pour exécuter un ordre 11 de desserrage du Frein de Parking Automatique en situation de démarrage en côte, ne reçoit pas au même moment les deux données correspondant à la même date et nécessaires, ce qui interdit de réaliser une estimation convenable.

Pour porter remède à ce problème, l'invention propose un moyen pour réaliser une correction sur les valeurs Cme du couple moyen estimé et Wm du régime moteur ainsi qu'un recalage des informations disponibles en fonction du débit de ces données selon les trames transmises sur le bus CAN 1.

A la figure 4, un moyen de calcul de l'estimation du couple transmis 50 transmet une valeur instantanée du couple moyen estimé Cme à un module 51 d'écrituré sur le bus CAN 1 de sorte que, à des instants déterminés, une valeur instantanée du couple moyen estimé soit disponible sur le bus CAN 1.

Par ailleurs, un module 52 de calcul d'estimation du régime moteur Wm est connecté à une entrée du module d'écriture 51 sur le bus CAN 1 de sorte que, à des instants déterminés, une valeur d'estimation ou de mesure du régime moteur soit disponible sur le bus CAN 1.

A cet effet, une information relative à un état particulier du moteur thermique, comme l'instant de point mort haut $t_{PMH}$, est fournie à des entrées convenables des modules 50 et 52 de façon à synchroniser les calculs du premier mot Cme et du second mot Wm.

Un contrôleur 53 des échanges sur le bus CAN 1 reçoit des modules 50 et 52 une information selon laquelle une donnée nouvelle est disponible, le module 51 d'écriture étant connecté au contrôleur 53 pour l'avertir d'une opération d'écriture sur le bus CAN 1 et une sortie de contrôleur du contrôleur 53 étant connectée à une entrée d'autorisation d'écriture sur le bus CAN 1 du module 51.

Le module 51 d'écriture sur le bus CAN 1 génère ainsi une trame de données en fonction des multiples données qu'il injecte sur le bus CAN.

Le moteur thermique représenté à la référence 54 est couplé à un capteur 55 de point mort haut pour générer à sa sortie 56 une information $t_{PMH}$ du point mort haut de l'instant où ce dernier apparaît.

Un module 57 de lecture sur le bus CAN est disposé qui reçoit un ordre de lecture par une connexion 58 au contrôleur 53 de bus CAN et acquitte sur une ligne 59 la fin de la lecture d'une trame.

Une sortie 60 du module de lecture 57 permet de transmettre respectivement à un registre 61 les valeurs successives d'estimation du couple moteur estimé décodées sur les trames reçues par le module 67 et à un registre 62 les valeurs successives de régime moteur Wm décodées sur les trames reçues par le module 67.

Le circuit contrôleur 53 du bus CAN comporte des sorties de commande,respectivement une sortie de commande 63 connectée à une entrée d'autorisation de lecture du registre 62 de régime moteur et une sortie de commande 64 connectée à une entrée d'autorisation de lecture du registre 61 des estimations du couple transmis, de sorte que les sorties respectivement 65 du registre 61 et 66 du registre 62 sont connectées aux entrées convenables d'un circuit de re-synchronisation 67 qui permet à chaque instant de maintenir une valeur corrigée en fonction de l'indication de l'instant de point mort haut $t_{PMH}$ fourni par la sortie 56 du capteur 55, des valeurs respectivement 68 instantanée du couple moyen estimé et 69 de régime moteur.

Le circuit de re-synchronisation 67 comporte une mémoire qui contient une table sur un cycle de paires de données de sorte que soit associé le numéro d'ordre d'une valeur représentative d'un premier mot reçu sur sa première entrée avec un numéro d'ordre d'une valeur représentative du numéro d'ordre d'un second mot reçu. Le circuit de re-synchronisation 68 comporte aussi des registres de suites de valeurs successives du premier mot et ou du second mot et un moyen, pour, en friction des associations de numéros d'ordre de la mémoire précitée pour appliquer en sortie un couple d'un premier mot et d'un second mot correspondant à un seul et même instant de calcul . Le couple de mots re synchronisés est alors présenté aux sorties 68 et 69.

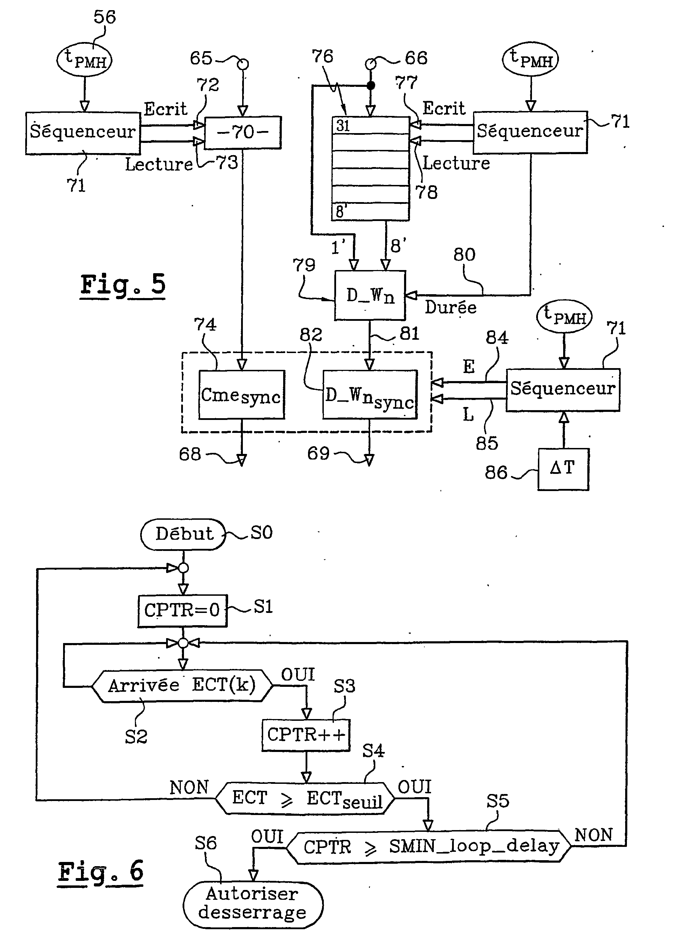

A la figure 5, on a représenté un mode de réalisation d'un circuit de re synchronisation 67 qui travaille essentiellement sur le régime moteur et qui permet d'exploiter un décalage dans le mécanisme de mise à disposition de couples de mots (Cme, Wm) qui correspond à un effet caractéristique lors de l'accélération du moteur thermique, situation qui apparaît toujours lorsque le véhicule est maintenu dans la pente avec le Frein de Parking Automatique serré.

A la borne d'entrée 65 du module 67 de synchronisation des données sur le bus CAN 1, on a connecté l'entrée d'écriture d'un registre de synchronisation 70 de l'estimation de couple transmis.

A cet effet, un séquenceur 71 reçoit par une entrée convenable le signal indicatif de point mort haut 56 et transmet des ordres d'écriture sur une ligne 72 et de lecture sur une ligne 73 à destination de bornes d'écriture et de lecture du registre 70. Dans le cas d'un signal de lecture, le signal correspond au régime du moteur avec un décalage d'une période proportionnelle au régime moteur. Cette mesure permet de rendre le délai de rafraîchissement de l'information sur le régime du moteur fonction de la valeur du régime moteur lui-même.

A un instant de re-synchronisation prédéterminé par rapport à la disponibilité indiquée sur la ligne 72, la ligne 73 de lecture transmet la valeur maintenue dans le registre 70 à un registre 74. Le registre 74 présente en permanence à sa sortie 68 une valeur disponible d'estimation du couple transmis synchronisé.

La borne d'entrée 56 du module 67 de re-synchronisation est connectée à l'entrée d'une pile 76 de registres dans laquelle est maintenue une pluralité de valeurs successives du régime moteur Wm acquis à des instants successifs sur le bus CAN 1.

A cet effet, un séquenceur 71 comporte deux sortie de commande d'écriture et de lecture respectivement 77 et 78 qui permettent de maintenir la pluralité de valeurs en plaçant la valeur la plus à jour sur la première adresse notée « 1 » de la pile 76 et en poussant vers le bas les valeurs contenues dans les registres suivants de la pile 76.

Un circuit soustracteur 79 comporte :

- une entrée positive connectée à une sortie de lecture de la pile 76 sur laquelle est disponible la valeur la plus ancienne du régime moteur Wm maintenue dans la pile 76, et
- une entrée négative à laquelle est connectée la valeur la plus récente du régime moteur disponible aussi sur la borne d'entrée 66 du module 67.

Une entrée 80 du circuit soustracteur 79 reçoit une valeur représentative « durée » de la durée écoulée lors de l'acquisition entre la valeur la plus ancienne, comme la huitième valeur « 8 », notée Wm(1) et reçue dans un exemple particulier de réalisation, et de la valeur la plus récente « 1 » notée Wm(8) de sorte qu'a la sortie 81 du circuit soustracteur 79 est disponible une valeur représentative d'une valeur estimée corrigée du régime moteur :

$$D\_Wm = [Wm(8)-Wm(1)]/durée.$$

La valeur calculée disponible à la sortie du circuit 79 est chargée dans un registre 82 de sorte qu'à sa sortie 83 est disponible une valeur de la dérivée temporelle du régime moteur $D\_Wm_{sync}$ synchronisée.

La lecture et l'écriture des registres 74 et 82 sont effectuées sous le contrôle du séquenceur 71 qui présente respectivement une ligne de commande d'écriture 84 et une ligne de commande d'écriture 85.

La commande de l'écriture est réalisée sous la commande du séquenceur 71 que gère un registre 86 dans lequel est enregistrée une valeur de décalage temporel ou retard ΔT qui correspond à un retard désiré de transmission des valeurs synchronisées au reste de l'estimateur de sorte qu'on puisse tenir compte notamment :

- du délai de remplissage du collecteur du moteur thermique, et
- du délai d'allumage lorsque le moteur thermique est en phase d'accélération comme c'est le cas lors d'un démarrage en côte.

Dans un exemple de réalisation, les inventeurs ont trouvé un effet le meilleur lorsque était appliqué un retard ΔT équivalent à trois Points Mort Haut successifs avant de démarrer la synchronisation et le transfert des couples des premier Cme et second Wm ou D_Wm mots de valeurs re-synchronisées.

A la figure 6, on a représenté un mode particulier de réalisation du procédé de l'invention. Le procédé de l'invention consiste à, lors d'une phase de début S0, re-synchroniser les données concernant le régime moteur et le couple moyen estimé, à calculer la valeur de seuil de l'estimation du couple transmis selon ce qui a été décrit à l'aide de l'organigramme de la figure 2, puis à exécuter la répétition du test que l'estimation du couple transmis calculée à la date donnée est supérieure au seuil ECT_seuil pendant au moins un nombre prédéterminé d'échantillons Smin_Loop_delay.

A cet effet, le compteur CPTR est mis à une valeur initiale 0 lors d'une étape S1, puis le contrôle passe à un test d'attente S2 d'une valeur ECT_k représentative du calcul d'estimation du couple transmis.

Quand cette valeur est disponible, le contrôle passe à une étape S3 d'incrémentation du compteur CPTR et ensuite à un test S4 de l'estimation de couple transmis ECT_k relativement au seuil ECTseuil.

Si le test est négatif, le contrôle retourne à l'initialisation du compteur CPTR = 0 de l'étape S1.

Si le test S4 est positif, le contrôle passe à un test S5 où on regarde si le compteur CPTR a atteint sa valeur maximale Smin_Loop_delay.

Si le test est positif, le contrôle passe à une étape S6 au cours de laquelle le calculateur 5 de contrôle du Frein de Parking Automatique FPA donne un ordre d'autorisation de desserrage du frein de parking 7.

Si le test S5 est négatif, le contrôle retourne à l'entrée du test S2 en attente d'arrivée de l'échantillon suivant d'estimation du couple transmis ECT_k.

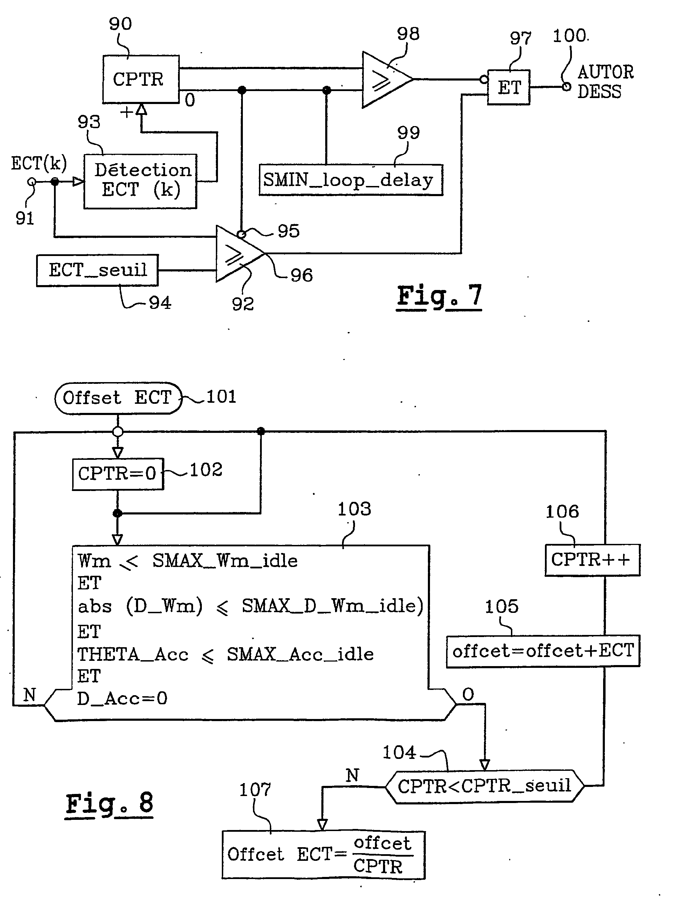

A la figure 7, on a représenté un mode de réalisation d'un moyen de calcul du calculateur 5 implémentant l'organigramme de la figure 6. Ce moyen de calcul du calculateur 5 comporte un compteur 90 qui maintient une valeur numérique CPTR et la met à jour à chaque événement présenté à son entrée notée « + » en l'augmentant d'une valeur prédéterminée comme « 1 ». La valeur CPTR du compteur 90 est alors disponible sur une borne de sortie de lecture.

Le moyen de calcul du calculateur 5 comporte une entrée 91 sur laquelle est chargée la valeur ECT_k et qui est connectée, d'une part, à l'entrée d'un circuit 93. de détection de l'arrivée d'une valeur ECT_k et à une première entrée d'un comparateur 92.

La sortie de détection du module 93 de détection d'arrivée d'un échantillon ECT_k est connectée à l'entrée '+' de commande d'incrémentation du compteur 90 dont la borne de sortie de lecture est connectée à une première entrée d'un comparateur 93.

Une valeur de seuil ECTseuil, maintenue dans un registre 94 est transmise à une seconde entrée du comparateur 92.

Le comparateur 92 comporte une première sortie 96 et une seconde sortie 95, complémentaires l'une de l'autre, de sorte que si le test réalisé par le comparateur 92 est positif, la première sortie 96 passe à l'état actif et est connectée à une première entrée d'une porte ET 97, tandis que la seconde sortie 95 passe à l'état inactif et est connectée à une borne d'entrée de remise à une valeur initiale comme la valeur '0' du compteur 90.

La valeur de comptage CPTR disponible dans le compteur 90 est transmise à une première entrée d'un second comparateur 98 dont une seconde entrée est connectée à un registre 99 maintenant la valeur de comptage maximale à l'issue de laquelle l'autorisation de desserrage peut être exécutée.

A cet effet, quand le test réalisé par le second comparateur 98 est positif, sa sortie passe à l'état actif et est connectée à une seconde entrée de la porté ET 97 de sorte que la sortie 100 de la porte ET 97 passe à l'état actif pour indiquer une autorisation de desserrage du Frein de Parking Automatique.

Dans un mode de réalisation particulier, la valeur Smin_Lop_Delay chargée en registre 99 est déterminée en fonction de la période d'échantillonnage ou cadence de boucle de l'algorithme de la figure 6 et du délai ou retard désiré entre le premier dépassement par la valeur de couple transmis estimé ECT de la valeur de seuil $ECT_{seuil}$ et la réalisation de l'ordre de desserrage du frein de parking FPA. Selon l'invention, le registres 99 comporte un moyen d'écriture d'une valeur ainsi déterminée de Smin_Lop_Delay qui est activé lors de l'initialisation du véhicule ou bien lors de sa fabrication ou lors de sa maintenance à l'aide d'un outil de production connu de l'homme de métier, ou bien lors de la détection d'un type de conducteur réalisée à l'aide du calculateur de bord 1 qui transmet sur le bus 1 une valeur caractéristique de Smin_Lop_Delay associée au conducteur détecté à l'aide par exemple de la clé de démarrage ou du type de conducteur selon un algorithme de détection du type de conduite effectué par le conducteur.

Dans un autre mode de réalisation particulier non représenté aux dessins, la valeur d'estimation de couple transmis ECT reçue à la borne 91 du module de la figure 7 reçoit de plus un décalage prédéterminé de façon à réduire l'effet perturbateur de la mise en marche et de l'arrêt de certains consommateurs secondaires d'énergie ou de puissance fournie par le moteur thermique. Un tel décalage est effectué en amont du circuit 91 de détection et de l'entrée du comparateur 92, à l'aide d'un additionneur qui effectue l'opération :

$$\texttt{ECT\_Corr\_k = ECT\_k + g(Consommateurs)}$$

Le procédé de l'invention apporte un moyen pour déterminer la plage dans laquelle le moteur peut être considéré comme au repos et la plage pendant laquelle un décalage g(Consommateurs) sur l'estimation de couple transmis peut être réalisé. Selon l'invention, quatre critères ou tests sont réalisés simultanément pour parvenir à un tel décalage.

A la figure 8, on a représenté un organigramme du procédé de l'invention. Le point d'entrée de calcul de décalage 101 permet de placer, lors d'une étape 102, un compteur particulier CPTR à une valeur initiale comme la valeur 0. Puis, le contrôle passe à l'étape de test 103 au cours duquel quatre conditions sont combinées :

$$\texttt{Wm} \leq \texttt{Smax\_Wm\_idle}$$

$$\texttt{ABS(D\_Wm)} \leq \texttt{Smax\_D\_M\_idle}$$

$$\text{THETA\_Acc} \le \text{Smax\_acc\_idle}$$

$$\text{D\_Acc} == 0.$$

Conditions dans lesquelles :

Smax_Wm_idle représente une valeur de seuil en dessous de laquelle le régime moteur indique que le moteur est en état de repos ou régime de ralenti ;
Smax_D_M_idle représente une valeur de seuil en dessous de laquelle la valeur absolue ABS(D_Wm) de la dérivée temporelle du régime moteur D_Wm indique que le moteur est en état de repos ou régime de ralenti ;
Smax_acc_idle représente une valeur de seuil en dessous de laquelle le degré d'enfoncement de la pédale d'accélérateur THETA_Acc indique que le moteur est en état de repos ou régime de ralenti ;
D_Acc représente la dérivée temporelle du degré d'enfoncement THETA_Acc de la pédale d'accélérateur qui est négative lorsque le conducteur relève le pied de la pédale d'accélérateur.

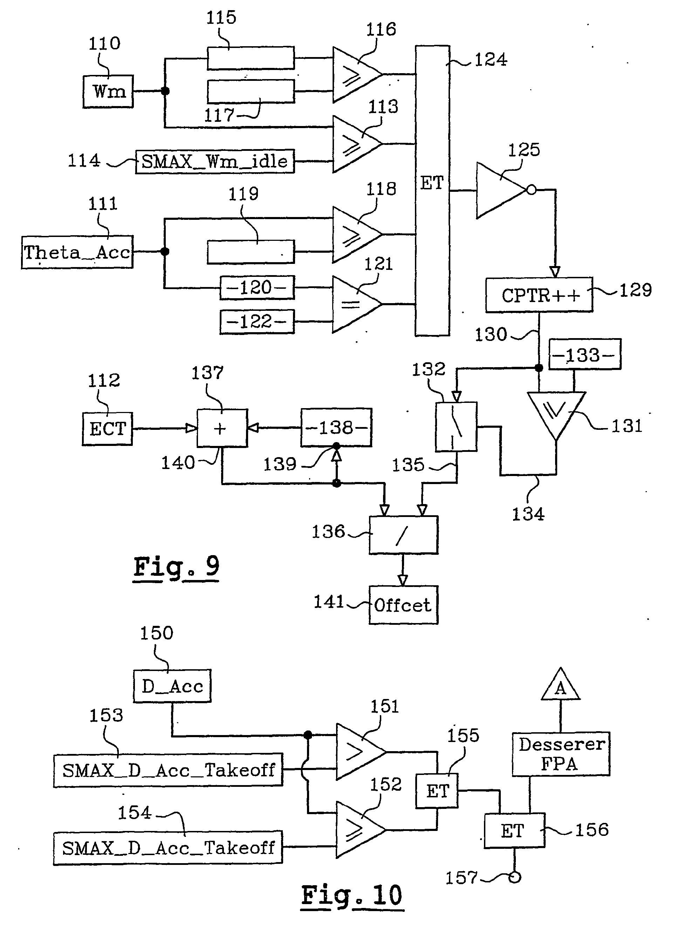

Si le test 103 est négatif, le contrôle retourne à l'initialisation 102 du compteur CPTR. Le groupe motopropulseur est réputé non connecté aux roues motrices.
Si le test 103 est positif, le contrôle passe à un test 104 où on regarde si le compteur CPTR est inférieur à une valeur de seuil CPTR_seuil prédéterminée.
Si le test 104 est positif, le contrôle passe à une étape 105 au cours de laquelle une valeur de décalage « offset », initialement nulle lorsque le compteur CPTR est lui-même initialisé à l'étape 102, est augmentée de la valeur de l'estimation ECT en cours.
Puis, la valeur de compteur CPTR est incrémentée d'un pas lors d'une étape 106 et le contrôle retourne à l'étape de test 103.
Si le test 104 est négatif, la valeur offset est transmise à une routine 107 de calcul d'une valeur de décalage de l'estimation de couple transmis ECT, valeur de décalage notée « offset_ECT » qui est égal au rapport de la valeur « offset » calculée lors de l'étape 105 avec la valeur CPTR du compteur qui vaut, à ce moment là, CPTR_seuil.
A la figure 9, on a représenté un mode de réalisation d'un dispositif mettant en oeuvre le procédé de l'organigramme de la figure 8.
Le circuit de la figure 9 comporte trois registres d'entrée respectivement :

- le registre 110 de la valeur Wm de régime moteur instantané,
- le registre 111 de degré d'enfoncement de la pédale d'accélérateur dans une variable THETA_acc,
- le registre 112 qui maintient la valeur instantanée d'estimation du couple transmis ECT.

Le registre 110 comporte une sortie de lecture connectée respectivement à une première entrée d'un comparateur 113 dont une seconde entrée est connectée à un registre 114 qui maintient une valeur de seuil supérieur Smax_Wm_idle représentative du régime limite de décollage.
Le registre 110 est aussi transmis à une entrée d'un circuit 115 de calcul de la dérivée D_Wm de la vitesse de rotation ou du régime moteur W_m dont une sortie sur laquelle est maintenue la valeur absolue de la dérivée temporelle du régime moteur est connectée à une première entrée d'un comparateur 116 dont une seconde entrée est connectée à la sortie de lecture d'un registre 117 dans lequel est maintenue la valeur de seuil de variation ou de dérivée temporelle du régime moteur Smax_D_Wm_idle de décollage du véhicule.
Le registre 111 qui maintient l'angle d'enfoncement ou l'appui de la pédale d'accélérateur THETA_acc est connecté à une première entrée d'un comparateur 118 dont une seconde entrée est connectée à la sortie de lecture d'un registre 119 dans lequel est enregistrée une valeur de seuil Smax_acc_idle correspondant à un degré maximal d'enfoncement de la pédale d'accélérateur en situation de décollage du véhicule.
La valeur THETA_acc est aussi transmise à un circuit 120 de calcul de la dérivée temporelle de l'enfoncement de la pédale d'accélérateur D_acc dont une sortie est transmise à une première entrée d'un comparateur 121.
Une seconde entrée du comparateur 121 est connectée à la sortie de lecture d'un registre 122 dans lequel est maintenue une valeur de seuil de la dérivés de l'accélération comme une valeur nulle ou sensiblement nulle de façon à détecter une situation dans laquelle le conducteur réalise un maintien de l'enfoncement de la pédale de l'accélérateur en position stable.
Les sorties des quatre comparateurs 116, 113, 118, 121 sont connectées aux entrées correspondantes d'une porte ET 124 dont la sortie est connectée à une entrée d'incrémentation d'un compteur 129 dont la valeur de comptage de sortie 130 est connectée respectivement à une première entrée d'un comparateur 131 et à une borne d'entrée d'un circuit tampon 132.

La seconde entrée du comparateur 131 est connectée à la sortie de lecture d'un registre 133 dans lequel est enregistrée une valeur maximale de comptage pour le compteur CPTR.

La sortie du compteur 131 est connectée à une borne de commande 134 du circuit tampon 132 de sorte qu'une borne de sortie 135 du tampon 132 recopie la valeur présentée à son entrée 130 quand la borne de commande 134 est à l'état haut, et la transmet à une entrée de dénominateur d'un circuit arithmétique diviseur 136.

Le registre 112 qui maintient la valeur instantanée d'estimation du couple transmis ECT est fournie à une première entrée d'un additionneur 137 dont une seconde entrée est connectée à la sortie de lecture d'un registre 138 maintenant une valeur partielle de somme accumulée.

Une entrée d'écriture 139 du registre 138. est connectée à la sortie 140 d'addition instantanée de l'additionneur 137 de sorte, qu'à chaque instant, le registre 138 contienne une valeur sommée des valeurs successives d'estimation de couple transmis ECT_k pendant l'évolution positive du compteur CPTR 129.

La sortie 140 de l'additionneur 137 est aussi connectée à une entrée de numérateur du circuit arithmétique diviseur 136 de sorte que, lorsque le signal 134 de sortie du comparateur passe à l'état haut, la valeur accumulée par l'additionneur 137 est divisée par la valeur du compteur 129 et de sorte que cette valeur accumulée soit fournie en sortie à un registre 141 maintenant une valeur d'estimation de couple transmis avec décalage selon le principe de l'algorithme de la figure 8.

A la figure 10, on a représenté un autre circuit mettant en oeuvre une disposition de l'invention permettant, à l'aide de l'information fournie par le capteur de degré d'enfoncement de la pédale d'accélérateur, de produire une information concernant l'activité du conducteur.

Dans un mode de réalisation, le circuit de mesure de l'activité du conducteur de l'invention permet de refuser le desserrage du frein de parking en cas de remontée de la pédale d'accélérateur. Dans une telle situation, on peut considérer que la remontée de la pédale d'accélérateur indique l'abandon de la tentative de démarrage par le conducteur.

Dans un autre mode de réalisation, on ajoute un filtrage d'une remontée trop forte de la pédale d'accélérateur, considérait que la détection d'une dérivée temporelle de l'angle d'enfoncement de la pédale d'accélérateur est une mesure d'une action de premier démarrage du moteur.

A cette fin, le dispositif de l'invention comporte un registre 150 dans lequel est maintenu la valeur instantanée de dérivée temporelle D_Acc du degré d'enfoncement THETA_Acc de la pédale d'accélérateur produit à l'aide du circuit 120 précité à la figure 9.

La valeur de (lecture du registre 150 est transmise aux premières entrées de deux comparateurs, respectivement 151 et 152, dont les secondes entrées sont respectivement connectées à des sorties de lecture de registres 153 et 154. Le registre 153 maintient une valeur de seuil inférieure Smin_D Acc_TakeOff, caractéristique d'une limite supérieure de vitesse d'enfoncement de la pédale d'accélérateur. Si la dérivée temporelle D_Acc est moins élevée que la valeur enregistrée, le comparateur 151 produit une valeur active à sa sortie qui est transmise à une première entrée d'une porte ET 155. De même, si cette dérivée temporelle D_Acc est plus petite ou égale à une valeur de seuil inférieure Smax_D Acc_TakeOff, enregistrée dans le registre 154, le circuit comparateur 152 passe à l'état actif et place sa sortie connectée à la seconde entrée de la porte ET 155 à la valeur active.

La sortie de la porte ET 155 est connectée à une première entrée d'une seconde porte ET 156 dont une seconde entrée est connectée à la borne de sortie 100 du circuit de la figure 7. L'autorisation de desserrer le Frein de Parking Automatique est alors présentée à la sortie 157 du circuit de la figure 10 si la sortie de la porte ET 155 est active en même temps que la borne de sortie 102.

L'invention apporte aussi un moyen de détecter une demande de démarrage en côte alors que le moteur n'est pas embrayé, et ce pourtant sans présence de capteur de degré d'enfoncement de la pédale d'embrayage ou de l'état d'embrayage.

A cette fin, selon l'invention, deux cartographies 163 et 164 représentant respectivement le degré d'enfoncement de la pédale d'accélérateur et l'estimation de couple transmis sont réalisées lors de l'initialisation du calculateur. Les bases de ces deux cartographies permettent d'établir si le moteur est débrayé des roues motrices ou si le moteur thermique est connecté mécaniquement aux roues motrices.

A cet effet, plusieurs cartographies peuvent être chargées en fonction notamment du type de conducteur inscrit dans un registre d'identification de conducteur, ou en fonction du type de véhicule lorsque le circuit de l'invention est destiné à équiper des véhicules différents d'une gamme d'un même constructeur.

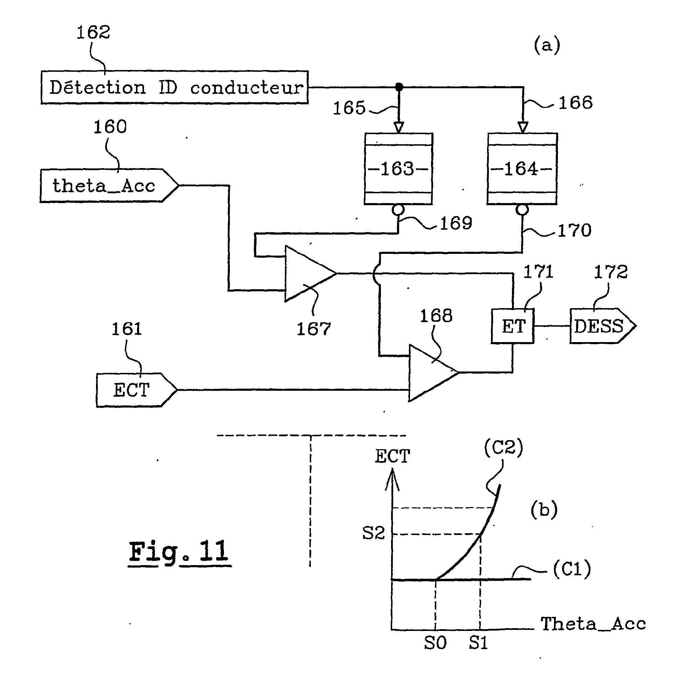

Le circuit du mode de réalisation de la figure 11 comporte essentiellement deux registres d'accès respectivement :

- un registre 160 pour maintenir la valeur instantanée du degré d'enfoncement de la pédale d'accélération THETA_ Acc, et

- un registre 161 pour maintenir la valeur instantanée d'estimation d'un couple transmis ECT.

Par ailleurs, un module 162 de détection de l'identification du conducteur et/ou du véhicule permet de déterminer quelle cartographie utiliser lors de l'exécution du procédé de l'invention. Le circuit ou module 162 de détection de l'identification du conducteur et/ou du véhicule comporte une ligne de sortie de commande qui est connectée à des entrées de commande 165 et 166 respectivement d'une première mémoire de cartographie 163 et d'une seconde mémoire de cartographie 164. La première mémoire de cartographie 163 comporte une liste de valeurs de seuil sur le degré d'enfoncement de la pédale d'accélérateur qui permet de distinguer si le conducteur est en phase d'embrayage ou non ; cette valeur de seuil étant déterminée par la détection du type de conducteur et/ou de véhicule du module 162.

La seconde mémoire de cartographie 164 contient une valeur de seuil à partir de laquelle on peut considérer le véhicule est embrayé sur l'estimation de couple transmis CT. A cet effet, les registres 160 et 161 sont connectés à des premières entrées d'un premier comparateur 167 et d'un second comparateur 168 dont les secondes entrées sont respectivement connectées à des sorties 169 de la première mémoire de cartographie 163 et 170 de la seconde mémoire de cartographie 164. Les sorties des deux comparateurs 167 et 168 sont connectées à des entrées d'une porte ET 171 dont la sortie est connectée 172 à un ordre de desserrage.

L'ordre de desserrage 172 peut être combiné avec l'ordre de desserrage issu de la sortie 157 du circuit de la figure 10 et/ou de la sortie 100 du circuit de la figure 7.

Dans la partie B de la figure 11, on a représenté les diagrammes de l'évolution de l'estimation de couple transmis ECT en ordonnée en fonction de l'angle d'enfoncement THETA_Acc de l'accélérateur. L'estimation de couple transmis est sensiblement constante à une valeur très faible selon le sens de rotation du moteur selon une courbe C1 quand le groupe motopropulseur est vide, c'est-à-dire quand l'embrayage n'est pas activé. La courbe d'évolution de l'estimation de couple transmis ECT est représentée par la droite C1, et plus généralement il s'agit d'une plage de valeurs ne dépendant pas de l'angle d'enfoncement de l'accélérateur de quelques Newton.mètres.

Dans une deuxième type de courbe comme la courbe C2, à partir d'un seuil S0 d'enfoncement de la pédale d'accélérateur, l'estimation de couple transmis augmente très rapidement. Ainsi, il est possible de déterminer un seuil S1 à partir duquel on peut commencer à tester l'estimation de couple transmis et un seuil S2 de couple transmis au-dessus duquel on peut être sûr que le moteur thermique est embrayé sur les roues motrices du véhicule.

Ces valeurs S1 et S2 sont enregistrées respectivement dans la première mémoire de cartographie 163 et la seconde mémoire de cartographie 164 en fonction du type de véhicule ou de type de conducteur ou de son identification pour un véhicule donné.

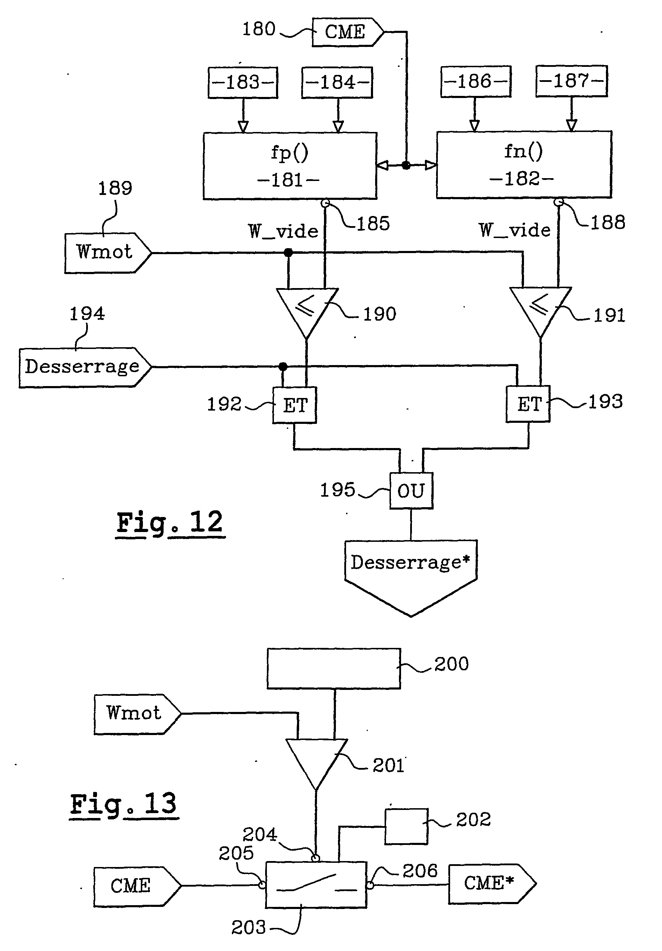

A la figure 12, on a représenté un moyen permettant de détecter le régime à vide lorsque le véhicule fonctionne à vide.

Le principe de cette partie de l'invention consiste à utiliser l'information de couple moteur estimé Cme, et d'effectuer une intégration de l'information afin d'estimer le régime du groupe motopropulseur et pour déterminer s'il fonctionne à vide. Le régime estimé à vide Wm_0 peut alors être comparé au régime réel moteur Wm et s'il reste inférieur au régime à vide Wm_0, on en déduit que le véhicule n'est pas à vide et on pourra alors autoriser un desserrage.

Dans un mode de réalisation, le circuit de la figure 12 comporte un registre d'entrée 180 dans lequel est maintenue la valeur Cme de couple moteur estimé produit sur le calculateur moteur. La valeur de couple moteur estimé 180 est transmise à des premières entrées de deux modules, respectivement 181 et 182, dans lesquels sont exécutées deux fonctions, respectivement fp() d'estimation de régime à vide en rotation avec un couple moteur estimé CME positif et fn() d'estimation de régime à vide en rotation avec un couple moteur estimé CME négatif.

Le module 181 permet d'estimer une valeur de régime à vide en fonction du couple moteur estimé Cme présenté à la borne ou registre 180 et en fonction d'un couple de paramètres estimés par avance par essais successifs d'accélérations à vide sur un échantillon de véhicules correspondant au type de véhicule sur lequel le dispositif de l'invention est monté. Dans un premier registre 183, on enregistre un gain appliqué sur le couple moteur estimé Cme, soit la valeur G_Cme_PV à vide. Dans un second registre 184, on enregistre un décalage sur la valeur de couple moteur estimé en position à vide, soit Offset_Cme_PV. La fonction fp() enregistrée dans le module de calcul 181 utilise les trois arguments Cme du registre 180, G_Cme_PV du registre 183 et Offset_Cme_PV du registre 184.

A la borne de sortie 185 du module 181 de calculs de la fonction fp() est présente une valeur estimée de régime à vide W_vide_p égale à une valeur déterminée de la fonction fp() appliquée aux trois arguments d'entrée 180, 183 et 184 selon la relation :

$$\texttt{W\_vide\_p = fp(G\_Cme\_PV, Offset\_Cme\_PV, Cme).}$$

Dans un mode de réalisation particulier, la fonction fp() est définie par la relation :

$$W\_vide\_p = G\_Cme\_PV \times Cme + Offset\_Cme\_PV.$$

Le module 182 permet d'estimer une valeur de régime à vide en fonction du couple moteur estimé Cme présenté à la borne ou registre 180 et en fonction d'un couple de paramètres estimés par avance par essais successifs d'accélérations à vide sur un échantillon de véhicules correspondant au type de véhicule sur lequel le dispositif de l'invention est monté. Dans un premier registre 186, on enregistre un gain appliqué sur le couple moteur estimé Cme, soit la valeur G_Cme_NV à vide. Dans un second registre 187, on enregistre un décalage sur la valeur de couple moteur estimé en position à vide, soit Offset_Cme_NV. La fonction fn() enregistrée dans le module de calcul 181 utilise les trois arguments Cme du registre 180, G_Cme_NV du registre 186 et Offset_Cme_NV du registre 187.

A la borne de sortie 188 du module 182 de calcul de la fonction fn() est présente une valeur estimée de régime à vide W_vide_n égale à une valeur déterminée de la fonction fn() appliquée aux trois arguments d'entrée 180, 186 et 187 selon la relation :

$$W\_vide\_n = fn(G\_Cme\_NV, \ Offset\_Cme\_NV, \ Cme).$$

Dans un mode de réalisation particulier, la fonction fn() est définie par la relation :

$$W\_vide\_n = G\_Cme\_NV \times Cme + Offset\_Cme\_NV.$$

Le circuit de la figure 12 comporte ensuite un registre 189 dans lequel est maintenu la valeur instantanée du régime moteur Wm et qui est fournie à des premières entrées, respectivement d'un premier comparateur 190 et d'un second comparateur 191, dont les secondes entrées sont respectivement connectées à la sortie 185 du module 181 et à la sortie 188 du module 182. Les comparateurs 190 et 191 commutent et passent à l'état actif quand le régime moteur est inférieur aux valeurs estimées de W vide_n ou W_vide_p selon le type de régime en cours sur le moteur thermique du véhicule. Les sorties des comparateurs 190 et 191 sont connectées à des premières entrées de portes ET 192 et 193 dont les secondes entrées sont respectivement connectées à la sortie de lecture d'un registre 194 dans lequel est maintenue une valeur active de desserrage du Frein de Parking Automatique de l'invention. Les sorties des portes ET 192, 193 sont connectées à des entrées d'une porte OU 195 et dont la sortie est placée sur un registre de sortie qui maintient une valeur de desserrage en détection de régime à vide.

A la Figure 13, on a représenté un mode de réalisation d'un circuit pour exécuter une étape du procédé de l'invention. Lors de la mise au point de l'invention, les inventeurs ont reconnu que le système d'injection qui équipe le moteur thermique du groupe motopropulseur pouvait lors des hauts régimes, c'est-à-dire lorsque la vitesse de rotation du moteur est élevée, être coupé brusquement. Or, le module qui est associé au groupe motopropulseur et qui transmet sur le bus 1 la valeur Cme de couple moyen estimé qui est utilisé sur le calculateur de l'invention pour élaborer l'ordre de desserrage devient erronée. Dans cette situation, le procédé de l'invention consiste à effectuer le remplacement de la valeur représentative du Couple moyen estimé Cme du moteur thermique par une valeur particulière de correction en régime de saturation.

A cette fin, le circuit de la figure 13 comporte une borne d'entrée Wmot qui reçoit une valeur représentative du régime et un registre 200 maintenant une valeur de seuil Smax_Wm_saturation au-delà de laquelle la coupure du système d'injection peut se produire.

Les deux valeurs précitées sont transmises aux bornes d'entrée d'un comparateur 201 dont la sortie est connectée à l'entrée 204 d'un circuit de commutation 203 dont une première borne d'entrée 205 reçoit une valeur représentative du couple moyen estimé Cme provenant du calculateur associé au groupe motopropulseur et dont une seconde borne d'entrée est connectée à une valeur de couple moyen estimé corrigée lors de la saturation du régime. Quand la borne de sortie du comparateur 201 passe à l'état actif parce que le régime du moteur a dépassé le seuil préfixé du registre 200, la valeur de correction du registre 202 est présentée à la sortie 206 du circuit de commutation 203 plutôt que la valeur Cme.

Le procédé de l'invention peut aussi comporter des options supplémentaires. Particulièrement, le procédé de l'invention trouve une application dans la situation d'un démarrage à plat, le véhicule étant à l'arrêt sur un terrain horizontal. Un tel service peut être implémenté à l'aide du dispositif de l'invention lors de la configuration du véhicule à la production, à la maintenance ou lors de la détection du type de conducteur ou du conducteur lorsque ce dernier prend place dans le véhicule.

Le caractère « horizontal » du terrain est défini par un test pour déterminer si le signal représentatif de la mesure de l'angle de pente est, en valeur absolue, inférieur à un seuil d'angle d'inclinaison ou de pente noté Smin_Slope_NonZero, ledit seuil étant enregistré dans un registre de seuil d'angle de pente, et ledit signal étant produit par le capteur de pente 7 (Figure 1).

Dans ce service, le procédé de l'invention consiste à produire un ordre de desserrage du frein de parking sur la seule détermination que l'estimation de couple transmis ECT est supérieure au seuil prédéterminé ECTseuil et, particulièrement sans tester un seuil sur l'appui de la pédale d'accélérateur comme cela est imposé dans le démarrage en côte ainsi qu'il a été décrit plus haut.

A cette fin, le procédé de l'invention consiste à initialiser une variable d'état lors du démarrage du véhicule pour indiquer que la pédale d'accélérateur n'a pas encore été enfoncée, la variable étant représentée par Acc_Was_NonZero = 0.

Dans la suite de l'exécution du procédé de l'invention, si le service de démarrage « à plat » est implémenté, une variable représentative de l'état de repos du moteur, variable représentée par Repos, est à l'état Faux (« 0 ») quand l'une des quatre conditions déjà décrites suivantes au moins n'est pas vraie :

$$Wm \leq Smax\_Wm\_idle$$

$$ABS(D\_Wm) \leq Smax\_D\_M\_idle$$

$$THETA\_Acc \leq Smax\_acc\_idle$$

$$D\_Acc \leq 0.$$

Et qui repasse ensuite à l'état Vrai (« 1 ») quand les quatre conditions sont vérifiées.

Selon le procédé de l'invention, la variable Acc_Was_NonZero reste à « 1 » dès que l'accélérateur a été appuyé et jusqu'à ce que la variable Repos retourne à « 1 ». Le procédé de l'invention consiste alors à autoriser le démarrage à plat » quand la variable Acc_Was_NonZero vaut « 0 ».

Il suffit alors de tester que l'estimation de couple transmis ECT est supérieure à une valeur de seuil ECTSeuil pour autoriser le desserrage du Frein de Parking Automatique et ainsi assurer le décollage du véhicule en le retenant sur une certaine plage d'accélération.

Le circuit du dispositif de l'invention qui met en oeuvre le service de démarrage « plat » comporte essentiellement :

- un circuit pour activer le service de démarrage à plat lors de la configuration du véhicule à la production, à la maintenance ou lors de la détection du type de conducteur ou du conducteur lorsque ce dernier prend place dans le véhicule qui produit un signal logique à « 0 » si le service n'est pas implémenté et à « 1 » si le service est implémenté ;
- un circuit de détection de situation « à plat » pour détecter que le signal représentatif de l'angle d'inclinaison produit par le capteur d'angle de pente 7 est en valeur absolue inférieure à une valeur de seuil enregistrée dans un registre convenable et représentative de la limite de situation « à plat » ;
- une première porte ET pour combiner les signaux de sortie du circuit pour activer le service de démarrage à plat et du circuit de détection de situation « à plat » ;
- un circuit pour élaborer la variable Acc_Was_NonZero qui comporte un comparateur du degré d'enfoncement de la pédale d'accélérateur à un seuil d'enfoncement très faible prédéterminé et un circuit de remise à zéro dès que la variable Repos issue du reste du dispositif de démarrage de l'invention retourne à « 0 » ;
- un circuit pour tester la valeur de l'estimation de couple transmis ECT issue du reste du dispositif de démarrage de l'invention à une valeur de seuil ECTSeuil et pour produire un ordre de desserrage du Frein de Parking Automatique ;
- une seconde porte ET pour combiner l'ordre de desserrage « à plat » issu du circuit pour tester la valeur de l'estimation de couple transmis ECT à la sortie de la première porte ET et dont la sortie est connectée au contrôleur du moteur électrique du Frein de Parking Automatique.

Le service de desserrage sur le plat sans accélérateur offre une amélioration du confort du service de décollage du véhicule en stationnement. Sans accélération, le décollage se fait plus lentement, le confort est amélioré.

Dans une première variante, le service de démarrage « à plat » est étendu au cas du démarrage en descente, première vitesse engagée.

A cette fin, le service de démarrage « à plat » est aussi activé quand on détecte une pente négative et que la première vitesse est engagée.

A cette fin, le dispositif de l'invention comporte :

- un circuit pour activer le service dé démarrage « en descente, première vitesse engagée » lors de la configuration du véhicule à la production, à la maintenance ou lors de la détection du type de conducteur ou du conducteur lorsque ce dernier prend place dans le véhicule qui produit un signal logique à « 0 » si le service n'est pas implémenté et à « 1 » si le service est implémenté ;
- un circuit de détection de situation « en descente, première vitesse engagée » pour détecter que le signal représentatif de l'angle d'inclinaison produit par le capteur d'angle de pente 7 est inférieure à une valeur de seuil négative enregistrée dans un registre convenable et représentative de la limite de situation « en descente, première vitesse engagée » ;
- une troisième porte ET pour combiner les signaux de sortie du circuit pour activer le service de démarrage « en descente, première vitesse engagée » et du circuit de détection de situation « en descente, première vitesse engagée » ;
- une quatrième porte ET pour combiner la sortie de la troisième porte ET et la sortie du circuit pour tester la valeur de l'estimation de couple transmis ECT issue du reste du dispositif de démarrage de l'invention à une valeur de seuil ECTSeuil et pour produire un ordre de desserrage du Frein de Parking Automatique de situation « en descente, première vitesse engagée ».

Dans une seconde variante, le service de démarrage « à plat » est étendu au cas du démarrage en descente en « marche arrière ».

A cette fin, le service de démarrage « à plat » est aussi activé quand on détecte une pente positive et que la vitesse de marche arrière est engagée.

A cette fin, le dispositif de l'invention comporte :

- un circuit pour activer le service de démarrage « en descente, vitesse de marche arrière engagée » lors de la configuration du véhicule à la production, à la maintenance ou lors de la détection du type de conducteur ou du conducteur lorsque ce dernier pend place dans le véhicule qui produit un signal logique à « 0 » si le service n'est pas implémenté et à « 1 » si le service est implémenté ;
- un circuit de détection de situation « en descente, vitesse de marche arrière engagée » pour détecter que le signal représentatif de l'angle d'inclinaison produit par le capteur d'angle de pente 7 est supérieure à une valeur de seuil positive enregistrée dans un registre convenable et représentative de la limite de situation « en descente, vitesse de marche arrière engagée » ;
- une troisième porte ET pour combiner les signaux de sortie du circuit pour activer le service de démarrage « en descente, vitesse de marche arrière engagée » et du circuit de détection de situation « en descente, vitesse de marche arrière engagée » ;
- une quatrième porte ET pour combiner la sortie de la troisième porte ET et la sortie du circuit pour tester la valeur de l'estimation de couple transmis ECT issue du reste du dispositif de démarrage de l'invention à une valeur de seuil ECTSeuil et pour produire un ordre de desserrage du Frein de Parking Automatique de situation « en descente, vitesse de marche arrière engagée ».

Dans un autre mode de réalisation, le véhicule étant doté d'un capteur de mesure de l'enfoncement de la pédale d'embrayage en tout ou rien, le signal issu de ce capteur étant à « 1 » quand l'embrayage est ouvert la situation « à vide » du véhicule est ainsi directement détectée sans avoir besoin de tester les diverses situations dans lequel le groupe motopropulseur a été séparé des roues motrices.

Dans un autre mode de réalisation, le procédé de l'invention comporte aussi une étape de détection d'un excès de tangage Dans une première application, le capteur de tangage permet de détecter que, alors que le véhicule accélère, les freins sont encore serrés et donc de confirmer dans une étape ultérieure un ordre de desserrage du frein de parking automatique. Dans une seconde application, l'étape de détection d'une valeur de tangage est suivie d'une étape pour interdire le desserrage du Frein de Parking Automatique en situation de démarrage si le tangage du véhicule appliqué par exemple par un mouvement trop important des passagers du véhicule dépasse un certain seuil prédéterminé.

A cette fin, le dispositif de l'invention comporte un circuit pour détecter un excès de tangage dont la sortie est active si l'excès de tangage dépasse un seuil prédéterminé dans un registre. La sortie du circuit pour détecter un excès de tangage est combinée par une première entrée inverseuse d'une porte ET, dont une autre entrée est connectée à la sortie du dispositif précédemment décrite sur laquelle se trouve l'ordre de desserrage du Frein de Parking Automatique, et la sortie de la porte ET produisant l'ordre de desserrage du Frein de Parking Automatique en dehors d'un excès de tangage.

Le circuit pour détecter un excès de tangage comporte une borne d'entrée qui reçoit un signal produit par le capteur d'angle de pente 7 qui présente une résolution suffisante pour détecter un excès de tangage. Le signal de détection de l'angle d'inclinaison est transmis à l'entrée d'un circuit pour produire un signal représentatif de la dérivée temporelle du signal de détection de l'angle d'inclinaison dont la sortie est connectée à une entrée d'un comparateur dont l'autre entrée est connectée à un registre maintenant une valeur de seuil d'excès de tangage. La sortie du comparateur est active quand la dérivée du signal représentatif de l'angle d'inclinaison du capteur 7 est supérieure au seuil prédéterminé.

La valeur de seuil d'excès de tangage est, dans un mode de réalisation produite par un générateur de valeurs de seuil d'excès de tangage en fonction de l'angle d'inclinaison produit par le capteur 7.

Dans un autre mode de réalisation, le générateur de valeurs de seuil d'excès de tangage comporte une première série de valeurs de seul dans un premier sens de démarrage et une seconde série de valeurs de seul dans un second sens de démarrage.

Le procédé de l'invention permet aussi d'apporter un service d'anticipation de la dynamique du démarrage. A cette fin, le procédé de l'invention comporte aussi une étape pour déterminer un terme d'anticipation sur l'ordre de desserrage du Frein de Parking Automatique en fonction de valeurs prédéterminées d'anticipation.

A cette fin, le procédé de l'invention consiste, lors de l'exécution du procédé d'élaboration de l'ordre de desserrage du Frein de Parking Automatique déjà décrit à exécuter aussi une étape de mesure du degré d'enfoncement de la pédale d'accélérateur Teta_Acc, puis à mesurer une dérivée temporelle du signal Teta_Acc de degré d'enfoncement, soit D_Acc, et à comparer cette valeur instantanée de dérivée D_Acc avec un seuil prédéterminé Seuil-Anticipe, de sorte que si la vitesse de variation du degré d'enfoncement D_Acc est supérieure à une valeur Seuil Anticipe, la boucle d'incrémentation de la valeur d'estimation de couple transmis ECT soit interrompu avant que le test 33 (Figure 2) soit vrai et pour produire de manière anticipée l'ordre de desserrage du Frein de Parking Automatique.

Le dispositif de mise en oeuvre du procédé de l'invention comporte à cette fin un circuit pour calculer la dérivée temporelle D_Acc du signal Teta_Acc de degré d'enfoncement fourni par le capteur d'angle de pente 7 (Figure 1) . Le circuit de calcul de la dérivée D_Acc comporte une sortie qui est connectée à une première entrée d'un comparateur dont l'autre entrée est connecté à un générateur d'une valeur prédéterminée d' une valeur Seuil_Anticipe, de sorte que sa sortie est active si la valeur Seuil_Anticipe est dépassée. Le signal de sortie du comparateur est alors transmise à une première entrée d'une autre porte ET dont la seconde entrée est connectée à un circuit pour détecter que l'estimation de couple transmis ECT est en cours d'incrémentation par exemple en détectant l'évolution du compteur CPTR (83, Figure 6). La sortie de l'autre porte ET est alors utilisée comme ordre de desserrage anticipé du Frein de Parking Automatique.

Dans un mode particulier de réalisation, le seuil prédéterminé Seuil-Anticipe est une fonction prédéterminée dépendant du degré de pente mesuré par le capteur d'angle de pente 7 (Figure 1).

Le dispositif de mise en oeuvre de l'invention comporte à cette fin un générateur d'un seuil prédéterminé Seuil_Anticipe sous forme d'une table de valeurs de seuil adressée par la valeur du degré de pente mesuré par le capteur d'angle de pente 7. La valeur Seuil_Anticipe est alors transmise au comparateur précité du dispositif de l'invention.

Dans un mode de réalisation du procédé de l'invention, le service d'anticipation de la dynamique du démarrage comporte aussi une étape pour prendre en compte le temps de réponse du moteur électrique équipant le Frein de Parking Automatique ainsi que les différents jeux dans le mécanisme de freinage qu'il active.

Dans le procédé de l'invention, il est prévu une anticipation du démarrage du frein de parking pour prendre en compte la dynamique du conducteur et le temps de réponse du système électromécanique. Le temps de réponse du système électromécanique est connu par mesures préalables, le cas échéant avec une procédure d'étalonnage. Soit Tr, ce temps de réponse. A chaque instant, sont déterminées l'estimation de couple transmis ECT et ses dérivées temporelles, comme (d/dt).ECT. Ces dérivées temporelles permettent de prendre en compte le dynamisme du conducteur, la valeur de la première dérivée temporelle augmentant avec le dynamisme du conducteur Selon l'invention, on exécute une étape de prédiction par extrapolation. Dans un mode de réalisation, on effectue alors une extrapolation ou prédiction sur la valeur de prédiction de l'estimation de couple transmis par une relation de la forme (à l'ordre 1) :

$$\text{ECT\_prédit(Tr)} = \text{ECT} + \text{Tr} \times \text{(d/dt).ECT}$$

Un opérateur pour exécuter une prédiction doit donc recevoir en entrées :

- une valeur caractéristique de temps de réponse Tr, par exemple enregistrée dans une mémoire convenable étalonnée le cas échéant par un processeur de temps de réponse du système de frein de parking automatique ;
- au moins une valeur en cours d'une estimation de couple transmis ECT_encours.

L'opérateur comporte alors un dérivateur qui comporte de manière connue :

- une mémoire d'une acquisition précédente d'une estimation de couple transmis ECT_ancien et dans un mode particulier de réalisation une mémoire d'un coefficient temporel Ta proportionnel au temps séparant deux acquisition ou estimations de couple transmis ;
- un soustracteur pour effectuer l'opération ECT_encours - ECT_ancien ;
- un diviseur pour effectuer la dérivation temporelle proprement dite par une opération de la forme (ECT_encours - ECT_ancien)/Ta.

L'opérateur comporte aussi :

- un multiplieur dont une entrée est connectée à la mémoire du temps de réponse Tr, et l'autre entrée est connectée à la sortie du diviseur produisant la valeur (d/dt).ECT et dont la sortie produit la valeur Tr x (d/dt).ECT ;
- un additionneur pour effectuer l'opération ECT_prédit(Tr) = ECT_encours + Tr x (d/dt).ECT.

L'anticipation peut alors, selon le procédé de l'invention, être exécutée par l'exécution d'un test dont le seuil, S_min_prédit et/ou S_max_prédit, est prédéterminé. Un tel test est de la forme : S_min_prédit < ECT_prédit < S_max_prédit, de sorte que si le test est positif, un ordre de desserrage anticipé du frein de parking automatique est généré en sortie du calculateur 5 de commande du Frein de Parking Automatique.

Le dispositif de l'invention pour mettre en oeuvre le procédé de l'invention comporte au moins :

- une mémoire d'une valeur de seuil S_min_prédit et/ou S_max_prédit de test de desserrage à anticipation pour enregistrer de manière fixe ou calibrable en fonction d'un processeur de calibration des seuils d'anticipation au desserrage ;
- un comparateur de la valeur de sortie de l'opérateur précité pour exécuter une prédiction sur la valeur d'estimation de couple moteur à au moins l'une des dites valeurs de seuil S_min_prédit et/ou S_max_prédit

de sorte que soit produit un signal d'autorisation de desserrage anticipé du Frein de Parking Automatique si le comparateur est activé.

Dans un mode de réalisation, le dispositif de l'invention est constitué par un processeur présentant une architecture logicielle en quatre blocs, à savoir :

- un bloc de saisie des données d'entrée parmi lesquelles le régime moteur Wm, la vitesse du véhicule Vv, l'angle de pente, le couple moyen estimé Cme, le degré d'enfoncement de la pédale d'accélérateur TETA_Acc, notamment prélevées sur le bus CAN 1 ;
- un bloc de traitement de signal appliqué sur les données d'entrée qui opère particulièrement des filtrages numériques sur tout ou partie des données d'entrée et réalise des corrections d'échelles ou d'unités ;
- un bloc d'initialisation des paramètres du procédé de l'invention comportant notamment les valeurs de seuil et les initialisations des compteurs ;
- un bloc d'exécution du procédé pour générer un ordre de desserrage du Frein de Parking Automatique.

## Revendications

**1.** Procédé d'assistance au démarrage d'un véhicule comportant un groupe motopropulseur et un Frein de Parking Automatique équipé d'un moyen pour exécuter un ordre de desserrage ou de désactivation du Frein de Parking Automatique, **caractérisé en ce qu'**il consiste à exécuter, au moins après une phase de démarrage du groupe motopropulseur :

- • Une étape d'estimation d'une valeur de couple transmis (ECT-seuil) qui équilibre le véhicule dans la pente ;
- • Une boucle consistant à exécuter un calcul incrémental d'une estimation du couple transmis réellement (ECT) à l'instant donné tant que l'estimation du couple transmis réellement (ECT) est insuffisante à surpasser l'estimation de couple transmis (ECT-seuil) ; puis
- • Une étape de production d'un ordre de desserrage ou de désactivation du Frein de Parking Automatique.

**2.** Procédé selon la revendication 1, **caractérisé en ce que** l'étape d'estimation d'une valeur de couple transmis qui équilibre le véhicule dans la pente comporte une étape pour calculer un modèle statique du véhicule dans la pente à partir d'une mesure d'un angle d'inclinaison délivrée par un capteur de pente (7) et de la connaissance d'une valeur déterminée représentative du rapport de transmission.

**3.** Procédé selon la revendication 2, **caractérisé en ce que**, la mesure d'un angle d'inclinaison étant inférieure à un seuil donné, l'estimation d'une valeur de couple transmis qui équilibre le véhicule dans la pente est augmentée d'une valeur déterminée.

**4.** Procédé selon la revendication 3, **caractérisé en ce que** la valeur déterminée d'augmentation de l'estimation d'une valeur de couple transmis qui équilibre le véhicule dans la pente dépend de la mesure de l'angle d'inclinaison.

**5.** Procédé selon la revendication 1, **caractérisé en ce que** l'étape de calcul incrémental (32) comporte :

- une étape de lecture d'une valeur de couple moyen efficace (Cme) associée à l'état dynamique du groupe motopropulseur ;
- une étape de lecture d'une valeur de régime du moteur (Wm) ;
- une étape de calcul de la dérivée temporelle du régime moteur ;
- une étape de détermination du moment d'inertie du groupe motopropulseur (Jmot) et de calcul du couple résistant sous la forme d'un produit du moment d'inertie du groupe motopropulseur par la dérivée temporelle du régime moteur ;

- une étape de détermination d'une estimation de couple transmis selon une relation de la forme :

$$ECT = Cme - Jmot \times \frac{dWm}{dt}.$$

**6.** Procédé selon la revendication 5, **caractérisé en ce qu'**il comporte une étape de re synchronisation de la lecture d'une valeur de couple moyen efficace (Cme) et d'une valeur de régime du moteur (Wm) de sorte que chaque couple de valeurs (Cme, Wm) corresponde à un même intervalle de temps.

**7.** Procédé selon la revendication 6, **caractérisé en ce qu'**il consiste à rajouter un délai prédéterminé, préférentiellement égal à trois périodes de passage au Point Mort Haut du moteur thermique du groupe motopropulseur, sur la valeur de re-synchronisation de la valeur de couple moyen estimé pour tenir compte notamment du délai d'attente de remplissage du collecteur et de l'exécution de l'allumage.

**8.** Procédé selon la revendication 6 ou 7, **caractérisé en ce que** l'étape de re synchronisation consiste à appliquer la re synchronisation sur la valeur dérivée (D_Wm) du régime moteur Wm) entre deux échantillons séparés par une durée de re synchronisation notamment selon la relation : D_Wm = [Wm(8)-Wm(1)]/durée, dans laquelle « durée » détermine la période de re synchronisation et Wm(1) et Wm(8) les valeurs de début et de fin de période de re synchronisation.

**9.** Procédé selon l'une des revendications 5 à 8, **caractérisé en ce que** l'étape d'estimation du couple transmis (ECT) comporte :

- une étape (S4) de comparaison d'une valeur d'estimation de couple transmis (ECT) à une valeur de seuil prédéterminée (ECTseuil) ;
- si la valeur prédéterminée de seuil (ECTseuil) est dépassée, une étape (S5) de test de la valeur de sortie d'un compteur (S3), incrémenté lors de chaque étape d'estimation de couple transmis (ECT), par rapport à une valeur de seuil prédéterminée (Smin_loop_Delay),
- si la valeur de seuil prédéterminée (Smin_loop_Delay) est dépassée, une étape de production d'un ordre d'autorisation de desserrage du Frein de Parking Automatique.

**10.** Procédé selon la revendication 9, **caractérisé en ce que** l'étape d'estimation de couple transmis ECT comporte de plus une étape pour exécuter un décalage prédéterminé de façon à réduire l'effet perturbateur de la mise en marche et/ou de l'arrêt de certains consommateurs secondaires (Consommateurs) d'énergie ou de puissance fournie par le moteur thermique, en effectuant l'opération :

$$ECT\_Corr\_k = ECT\_k + g(Consommateurs)$$

Une étape préalable pour déterminer une plage dans laquelle le moteur peut être considéré comme au repos et une plage pendant laquelle un décalage g(Consommateurs) sur l'estimation de couple transmis pouvant être exécutée.

11. Procédé selon la revendication 10, **caractérisé en ce que** l'étape pour exécuter un décalage est effectuée à l'issue d'un test (103) au cours duquel quatre conditions sont combinées :

$$Wm \leq Smax\_Wm\_idle$$

$$ABS(D\_Wm) \leq Smax\_D\_M\_idle$$

$$THETA\_Acc \leq Smax\_acc\_idle$$

$$D\_Acc == 0.$$

conditions dans lesquelles :

Smax_Wm_idle représente une valeur de seuil en dessous de laquelle le régime moteur indique que le moteur est en état de repos ou régime dé ralenti ;
Smax_D_M_idle représente une valeur de seuil en dessous de laquelle la valeur absolue ABS(D_Wm) de la dérivée temporelle du régime moteur D_Wm indique que le moteur est en état de repos ou régime de ralenti ;
Smax_acc_idle représente une valeur de seuil en dessous de laquelle le degré d'enfoncement de la pédale d'accélérateur THETA_Acc indique que le moteur est en état de repos ou régime de ralenti ;
D_Acc représente la dérivée temporelle du degré d'enfoncement THETA_Acc de la pédale d'accélérateur qui est négative lorsque le conducteur relève le pied de la pédale d'accélérateur ;

de sorte que si le test (103) est négatif, le contrôle retourne à l'initialisation (102) d'un compteur (CPTR), le groupe motopropulseur étant réputé non connecté aux roues motrices ;
et de sorte que si le test (103) est positif, le contrôle passe à un test (104) où on regarde si le compteur (CPTR) est inférieur à une valeur de seuil (CPTR_seuil) prédéterminée ;
de sorte que si le test (104) est positif, le contrôle passe à une étape (105) au cours de laquelle une valeur de décalage « offset », initialement nulle lorsque le compteur (CPTR) est lui-même initialisé à l'étape (102), est augmentée de la valeur de l'estimation ECT en cours ;
puis, la valeur de compteur (CPTR) étant incrémentée d'un pas lors d'une étape (106) et le contrôle retournant à l'étape de test (103) ;
de sorte que si le test (104) est négatif, la valeur offset est transmise à une routine (107) de calcul d'une valeur de décalage de l'estimation de couple transmis ECT, valeur de décalage notée « offset_ECT » qui est égale au rapport de la valeur « offset » calculée lors de l'étape (105) avec la valeur (CPTR_seuil) du compteur.

12. Procédé selon l'une des revendications précédentes, **caractérisé en ce qu'**il comporte une étape pour produire une information d'activité du conducteur de sorte que soit refusé le desserrage du Frein de Parking Automatique en cas de remontée de la pédale d'accélérateur.

13. Procédé selon l'une des revendications précédentes, **caractérisé en ce qu'**il comporte une étape pour détecter une demande de démarrage alors que le groupe motopropulseur n'est pas embrayé.

**14.** Procédé selon la revendication 13, **caractérisé en ce que** l'étape consiste, sans utiliser de capteur d'enfoncement de la pédale d'embrayage, à détecter l'état embrayé à l'aide de deux cartographies de l'estimation de couple transmis en fonction du degré d'enfoncement de la pédale d'accélérateur respectivement établies lorsque les roues sont embrayées et lorsque les roues ne sont pas embrayées et en comparant la valeur de l'estimation de couple transmis à chacune des valeurs de cartographies adressées par la mesure du degré d'enfoncement de la pédale d'accélérateur pour, si la comparaison à la première cartographie est positive produire une information caractéristique d'un état débrayé et si la comparaison à la seconde cartographie est positive produire une information caractéristique d'un état embrayé.

**15.** Procédé selon la revendication 13, **caractérisé en ce que** l'étape consiste en utilisant un capteur d'enfoncement de la pédale d'embrayage en tout ou rien à produire une information caractéristique d'un état embrayé ou débrayé.

**16.** Procédé selon l'une quelconque des revendications précédentes, **caractérisé en ce qu'**il comporte une étape pour détecter le régime à vide, qui consiste à

- comparer l'information de couple moteur estimé (Cme) à deux fonctions d'estimation de régime à vide en rotation avec une estimation de couple transmis positif fp() et en rotation avec une estimation de couple transmis négatif fn() ;
- à appliquer à la fonction fp() un gain (G_Cme_PV) à vide appliqué sur le couple moteur estimé (Cme), un décalage (Offset_Cme_PV) sur la valeur de couple moteur estimé en position à vide, et la valeur en cours (Cme) pour produire une valeur de régime à vide en rotation avec une estimation de couple transmis positif a priori ;
- à appliquer à la fonction fn() un gain (G_Cme_NV) à vide appliqué sur le couple moteur estimé (Cme), un décalage (Offset_Cme_NV) sur la valeur de couple moteur estimé en position à vide, et la valeur en cours (Cme) pour produire une valeur de régime à vide en rotation avec une estimation de couple transmis négatif a priori ; .
- à comparer la valeur du régime moteur (Wm) pour déterminer si on se trouve dans un régime à vide, à rotation avec une estimation de couple transmis positif ou avec une estimation de couple transmis négatif ;
- à autoriser le desserrage du Frein de Parking Automatique seulement si aucun régime à vide n'est détecté.

**17.** Procédé selon l'une des revendications précédentes, **caractérisé en ce qu'**il comporte une étape de détection de saturation du moteur thermique à haut régime de sorte que soit interdit le desserrage du frein de Parking Automatique en régime de saturation.

**18.** Procédé selon l'une des revendications précédentes, **caractérisé en ce qu'**il comporte une étape pour produire un service de démarrage « à plat » sans seuil sur l'appui de la pédale d'accélérateur qui consiste :

- à produire un ordre de desserrage du frein de parking sur la seule détermination que l'estimation de couple transmis ECT est supérieure au seuil prédéterminé ECTseuil et, particulièrement sans tester un seuil sur l'appui de la pédale d'accélérateur ;
- à initialiser une variable d'état lors du démarrage du véhicule pour indiquer que la pédale d'accélérateur n'a pas encore été enfoncée, la variable étant représentée par Acc_Was_NonZero = 0 ;
- à lire une variable représentative de l'état de repos du moteur (Repos) ;
- à traiter la variable Acc_Was_NonZero de sorte qu'elle reste à « 1 » dès que l'accélérateur a été appuyé et jusqu'à ce que la variable Repos retourne à « 1 » ;

et **en ce qu'**il consiste alors à autoriser le démarrage « à plat » quand la variable Acc_Was_NonZero vaut « 0 » et à tester que l'estimation de couple transmis ECT est supérieure à une valeur de seuil ECTSeuil pour autoriser le desserrage du Frein de Parking Automatique et ainsi assurer le décollage du véhicule en le retenant sur une certaine plage d'accélération.

**19.** Procédé selon la revendication 18, **caractérisé en ce qu'**il consiste à étendre le service de démarrage « à plat » à un service de démarrage en descente, première vitesse engagée.

**20.** Procédé la revendication 18, **caractérisé en ce qu'**il consiste à étendre le service de démarrage « à plat » à un service de démarrage en descente, rapport de marche arrière engagé.

**21.** Procédé selon l'une des revendications précédentes, **caractérisé en ce qu'**il comporte une étape de détection d'un excès de tangage et une étape pour interdire le desserrage du Frein de Parking Automatique en situation de démarrage si le tangage du véhicule appliqué par exemple par un mouvement trop important des passagers du véhicule dépasse un certain seuil prédéterminé.

**22.** Procédé selon l'une des revendications précédentes, **caractérisé en ce qu'**il comporte une étape pour déterminer un terme d'anticipation sur l'ordre de desserrage du Frein de Parking Automatique en fonction de valeurs prédéterminées d'anticipation qui consiste, lors de l'élaboration de l'ordre de desserrage du Frein de Parking Automatique, à exécuter aussi une étape de mesure du degré d'enfoncement de la pédale d'accélérateur Teta_Acc, puis à mesurer une dérivée temporelle du signal Teta_Acc de degré d'enfoncement, soit D_Acc, et à comparer cette valeur instantanée de dérivée D_Acc avec un seuil prédéterminé Seuil_Anticipe, de sorte que si la vitesse de variation du degré d'enfoncement D_Acc est supérieure à une valeur Seuil_Anticipe, la boucle d'incrémentation de la valeur d'estimation de couple transmis ECT soit interrompu avant que le test (33 ; Figure 2) soit vrai et pour produire de manière anticipée l'ordre de desserrage du Frein de Parking Automatique.

**23.** Dispositif d'assistance au démarrage en côte d'un véhicule comportant un groupe motopropulseur, et un Frein de Parking Automatique équipé d'un moyen (7, 8) pour exécuter un ordre de desserrage ou de désactivation du frein de parking en mettant en oeuvre le procédé selon l'une au moins des revendications précédentes, **caractérisé en ce qu'**il comporte un calculateur (5) d'un ordre de desserrage connecté à un capteur (7) du degré de pente dans laquelle se trouve engagé le véhicule et à un capteur délivrant une information sur le régime ou vitesse de rotation du groupe motopropulseur du véhicule et **caractérisé par le fait que** le calculateur (5) comporte un moyen d'estimation du couple transmis (ECT) connecté à une première entrée d'un moyen de comparaison dont une seconde entrée est connectée à un moyen pour produire une valeur de seuil de couple transmis correspondant au maintien du véhicule, de sorte qu'une borne de sortie dudit moyen de comparaison produise un ordre de desserrage (11) à destination du frein de parking électrique (7, 8).

**24.** Dispositif selon la revendication 23, **caractérisé en ce qu'**il comporte :

  • un premier module de lecture du couple moyen efficace Cme qui est fourni par un calculateur (3) du moteur sous forme d'une information circulant sur le bus (1) du véhicule,
  • un deuxième module de lecture de la vitesse instantanée Wm de rotation du moteur thermique qui est fourni par le calculateur du moteur (3) sous forme d'une information circulant sur le bus (1) du véhicule,

  • un troisième module permettant de calculer la dérivée temporelle $\dfrac{dWm}{dt}$ de la vitesse de rotation à la sortie du groupe motopropulseur à partir de la donnée de la vitesse de rotation ou régime moteur prélevé par le deuxième module ;
  • un quatrième module pour calculer le produit d'une valeur du moment d'inertie Jmot caractéristique de l'inertie du moteur ainsi que la valeur de sortie dudit troisième module ;
  • un cinquième module pour soustraire la valeur de sortie du quatrième module, présentée à une entrée de soustraction du cinquième module, de la valeur de sortie du dit premier module de sorte qu'à sa sortie soit présentée une valeur instantanée de l'estimation de couple transmis instantanée produite selon une relation :

$$ECT = Cme - Jmot \times \dfrac{dWm}{dt}$$

**25.** Dispositif selon l'une des revendications 23 ou 24, **caractérisé en ce que**, les valeurs de couple moteur estimé (Cme) et de régime moteur (Wm) étant fournis sur des trames d'un bus (1) par un calculateur de contrôle du moteur (3), il comporte un circuit de re synchronisation (67).

**26.** Dispositif selon la revendication 25, **caractérisé en ce que** le circuit de re-synchronisation (67) comporte :

  - une mémoire qui contient une table sur un cycle de paires de données de sorte que soit associé le numéro d'ordre d'une valeur représentative d'un premier mot reçu sur sa première entrée avec un numéro d'ordre d'une valeur représentative du numéro d'ordre d'un second mot reçu,
  - des registres de suites de valeurs successives du premier mot et ou du second mot et
  - un moyen, pour, en fonction des associations de numéros d'ordre de la mémoire précitée pour appliquer en sortie un couple d'un premier mot et d'un second mot correspondant à un seul et même instant de calcul et pour présenter le couple de mots re synchronisés est à des bornes de sortie (68, 69).

**27.** Dispositif selon la revendication 25 ou 26, **caractérisé en ce que** le circuit de re synchronisation (67) travaille essentiellement sur le régime moteur et permet d'exploiter un décalage dans le mécanisme de mise à disposition de couples de mots (Cme, Wm) un effet caractéristique lors de l'accélération du moteur thermique et qui comporte :

un registre de synchronisation (70) de l'estimation de couple transmis (Cme) ;
un séquenceur (71) qui reçoit un signal (56) indicatif de point mort haut et qui transmet des ordres d'écriture (72) et de lecture (73) au registre (70) ;
un registre (74) d'une valeur disponible d'estimation du couple transmis synchronisé ;
une pile (76) de registres dans laquelle est maintenue une pluralité de valeurs successives du régime moteur (Wm) acquis à des instants successifs sur le bus CAN (1) ;
un circuit différentiateur (79) qui comporte :

- une entrée positive connectée à une sortie de lecture de la pile (76) sur laquelle est disponible la valeur la plus ancienne du régime moteur Wm maintenue dans la pile (76), et
- une entrée négative à laquelle est connectée la valeur la plus récente du régime moteur disponible aussi sur la borne d'entrée (66) du module (67) ;
- Une entrée (80) qui reçoit une valeur représentative « durée » de la durée écoulée lors de l'acquisition entre la valeur la plus ancienne, et la valeur la plus récente de sorte qu'à la sortie (81) du circuit différentiateur (79) soit disponible une valeur représentative d'une valeur synchronisée de la dérivée temporelle moyennée du régime moteur selon une relation de la forme :

$$D\_Wm_{sync} = [Wm(8)-Wm(1)]/durée \ ;$$

chargée dans un registre (82).

**28.** Dispositif selon la revendication 27, **caractérisé en ce que** une borne de commande d'écriture du registre (82) maintenant une valeur synchronisée de la dérivée temporelle moyennée du régime moteur est connectée au séquenceur (71) que gère un registre (86) dans lequel est enregistrée une valeur de décalage temporel ou retard $\Delta T$ qui correspond à un retard désiré de transmission des valeurs synchronisées au reste de l'estimateur de sorte qu'on puisse tenir compte notamment :

- du délai de remplissage du collecteur du moteur thermique, et
- du délai d'allumage lorsque le moteur thermique est en phase d'accélération comme c'est le cas lors d'un démarrage en côte.

**29.** Dispositif selon la revendication 24, **caractérisé en ce qu'**il comporte un compteur (90) qui maintient une valeur numérique CPTR et la met à jour à chaque événement présenté à son entrée notée « + » en l'augmentant d'une valeur prédéterminée comme « 1 » ;
une entrée (91) sur laquelle est chargée la valeur ECT_k une valeur en cours d'incrémentation de l'estimation de couple transmis et qui est connectée, d'une part, à l'entrée d'un circuit (93) de détection de l'arrivée d'une valeur ECT_k et à une première entrée d'un comparateur (92) ;
la sortie de détection du module (93) de détection d'arrivée d'un échantillon ECT_k est connectée à l'entrée '+' de commande d'incrémentation du compteur (90) dont la borne de sortie de lecture est connectée à une première entrée d'un comparateur (93) ;
un registre (94) contenant une valeur de seuil ECTseuil, et transmise à une seconde entrée du comparateur (92) ;
le comparateur (92) comporte une première sortie (96) et une seconde sortie (95), complémentaires l'une de l'autre, de sorte que si le test réalisé par le comparateur (92) est positif, la première sortie (96) passe à l'état actif et est connectée à une première entrée d'une porte ET (97), tandis que la seconde sortie (95) passe à l'état inactif et est connectée à une borne d'entrée de remise à une valeur initiale comme la valeur '0' du compteur (90) ;
un second comparateur (98) dont une première entrée reçoit la valeur de comptage CPTR disponible dans le compteur (90) et dont une seconde entrée est connectée à un registre (99) maintenant la valeur de comptage maximale à l'issue de laquelle l'autorisation de desserrage peut être exécutée ;
de sorte que, quand le test réalisé par le second comparateur (98) est positif, sa sortie passe à l'état actif et est connectée à une seconde entrée de la porte ET (97) de sorte que la sortie (100) de la porte ET (9)7 passe à l'état actif pour indiquer une autorisation de desserrage du Frein de Parking Automatique.

30. Dispositif selon la revendication 29, **caractérisé en ce qu'**il comporte un registre (99) contenant une valeur (Smin_Lop_Delay) déterminée en fonction de la période d'échantillonnage ou cadence de boucle et du délai ou retard désiré entre le premier dépassement par la valeur de couple transmis estimé ECT de la valeur de seuil $ECT_{seuil}$ et la réalisation de l'ordre de desserrage du frein de parking FPA, le registre (99) comportant un moyen d'écriture d'une valeur ainsi déterminée de Smin_Lop_Delay qui est activé lors de l'initialisation du véhicule ou bien lors de sa fabrication ou lors de sa maintenance à l'aide d'un outil de production connu de l'homme de métier, ou bien lors de la détection d'un type de conducteur réalisée à l'aide du calculateur de bord 1 qui transmet sur le bus 1 une valeur caractéristique de Smin_Lop_Delay associée au conducteur détecté à l'aide par exemple de la clé de démarrage ou du type de conducteur selon un algorithme de détection du type de conduite effectué par le conducteur.

31. Dispositif selon la revendication 30, **caractérisé en ce que**, à l'aide d'un additionneur qui effectue l'opération : ECT_Corr_k = ECT_k + g(Consommateurs), la valeur d'estimation de couple transmis ECT reçue à la borne (91) reçoit de plus un décalage prédéterminé de façon à réduire l'effet perturbateur de la mise en marche et de l'arrêt de certains consommateurs secondaires d'énergie ou de puissance fournie par le moteur thermique, décalage effectué en amont du circuit (91) de détection et de l'entrée du comparateur (92).

32. Dispositif selon la revendication 31, **caractérisé en ce qu'**il comporte un circuit pour exécuter un décalage selon l'état de régime à vide ou en charge.

33. Dispositif selon l'une des revendications 23 à 32, **caractérisé en ce qu'**il comporte un circuit (150 - 172) pour détecter l'activité du conducteur à l'aide de deux comparateurs (151, 152) de la dérivée temporelle (D_Acc) du degré d'enfoncement de la pédale d'accélérateur à un intervalle de degré d'enfoncement (SMIN_D_Acc_Takeoff, SMAX_D_Acc_Takeoff) dans deux registres (153, 154) et à l'aide d'une porte ET (156) pour valider l'ordre de desserrement du Frein de Parking Automatique.

34. Dispositif selon l'une des revendications 23 à 33, **caractérisé en ce qu'**il comporte un circuit (160-172) pour détecter l'état embrayé ou non embrayé du groupe motopropulseur à l'aide d'une pluralité de cartographies (163, 164) contenant une suite de valeurs d'estimation de couple transmis (ECT) en fonction du degré d'enfoncement de la pédale d'accélérateur établies selon que l'embrayage est ou non actif, à l'aide d'une porte ET (171) pour valider la production de l'ordre de desserrage du Frein de Parking Automatique en fonction du type de conducteur, du degré d'enfoncement de la pédale d'accélérateur (TETA_Acc) et de l'estimation de couple transmis (ECT), une porte ET (171) validant l'ordre de desserrement du Frein de Parking Automatique.

35. Dispositif selon l'une des revendications 23 à 34, **caractérisé en ce qu'**il comporte un circuit (180 - 195) pour détecter l'état à vide du véhicule selon le sens de rotation qui comporte deux générateurs (181 , 182) d'une fonction déterminant le régime moteur à vide, connectés à deux comparateurs (190, 191) de la valeur instantanée du régime moteur (Wm), et de deux portes ET (192, 193) pour valider un ordre de desserrement du Frein de Parking Automatique.

36. Dispositif selon l'une des revendications 23 à 35, **caractérisé en ce qu'**il comporte un circuit (200 - 206) pour déterminer un état de saturation du moteur thermique qui comporte un comparateur (201) pour déterminer si le régime moteur (Wm) et pour appliquer ou non une valeur corrigée dans un moyen de correction (202, 203) de valeurs de couple moteur estimé (Cme).

37. Dispositif selon l'une des revendications 23 à 36, **caractérisé en ce qu'**il comporte un circuit pour mettre en oeuvre un service de démarrage «à plat » qui comporte essentiellement :

   - un circuit pour activer le service de démarrage à plat lors de la configuration du véhicule à la production, à la maintenance ou lors de la détection du type de conducteur ou du conducteur lorsque ce dernier prend place dans le véhicule qui produit un signal logique à « 0 » si le service n'est pas implémenté et à « 1 » si le service est implémenté ;
   - un circuit de détection de situation « à plat » pour détecter que le signal représentatif de l'angle d'inclinaison produit par le capteur d'angle de pente (7) est en valeur absolue inférieure à une valeur de seuil enregistrée dans un registre convenable et représentative de la limite de situation « à plat » ;
   - une première porte ET pour combiner les signaux de sortie du circuit pour activer le service de démarrage à plat et du circuit de détection de situation « à plat » ;

- un circuit pour élaborer la variable Acc_Was_NonZero qui comporte un comparateur du degré d'enfoncement de la pédale d'accélérateur à un seuil d'enfoncement très faible prédéterminé et un circuit de remise à zéro dès que la variable Repos issue du reste du dispositif de démarrage de l'invention retourne à « 0 » ;

- un circuit pour tester la valeur de l'estimation de couple transmis ECT issue du reste du dispositif de démarrage de l'invention à une valeur de seuil ECTSeuil et pour produire un ordre de desserrage du Frein de Parking Automatique ;

- une seconde porte ET pour combiner l'ordre dé desserrage « à plat » issu du circuit pour tester la valeur de l'estimation de couple transmis ECT à la sortie de la première porte ET et dont la sortie est connectée au contrôleur du moteur électrique du Frein de Parking Automatique.

**38.** Dispositif selon l'une des revendications 23 à 37, **caractérisé en ce qu'**il comporte un circuit pour mettre en oeuvre un service de démarrage en descente, première vitesse engagée qui comporte :

- un circuit pour activer le service de démarrage « en descente, première vitesse engagée » lors de la configuration du véhicule à la production, à la maintenance ou lors de la détection du type de conducteur ou du conducteur lorsque ce dernier prend place dans le véhicule qui produit un signal logique à « 0 » si le service n'est pas implémenté et à « 1 » si le service est implémenté ;

- un circuit de détection de situation « en descente, première vitesse engagée » pour détecter que le signal représentatif de l'angle d'inclinaison produit par le capteur d'angle de pente 7 est inférieure à une valeur de seuil négative enregistrée dans un registre convenable et représentative de la limite de situation « en descente, première vitesse engagée » ;

- une troisième porte ET pour combiner les signaux de sortie du circuit pour activer le service de démarrage « en descente, première vitesse engagée » et du circuit de détection de situation « en descente, première vitesse engagée » ;

- une quatrième porte ET pour combiner la sortie de la troisième porte ET et la sortie du circuit pour tester la valeur de l'estimation de couple transmis ECT issue du reste du dispositif de démarrage de l'invention à une valeur de seuil ECTSeuil et pour produire un ordre de desserrage du Frein de Parking Automatique de situation « en descente, première vitesse engagée ».

**39.** Dispositif selon l'une des revendications 23 à 38, **caractérisé en ce qu'**il comporte un circuit pour mettre en oeuvre un service de démarrage en descente en « marche arrière » qui comporte :

- un circuit pour activer le service de démarrage « en descente, vitesse de marche arrière engagée » lors de la configuration du véhicule à la production, à la maintenance ou lors de la détection du type de conducteur ou du conducteur lorsque ce dernier prend place dans le véhicule qui produit un signal logique à « 0 » si le service n'est pas implémenté et à « 1 » si le service est implémenté ;

- un circuit de détection de situation « en descente, vitesse de marche arrière engagée » pour détecter que le signal représentatif de l'angle d'inclinaison produit par le capteur d'angle de pente 7 est supérieure à une valeur de seuil positive enregistrée dans un registre convenable et représentative de la limite de situation « en descente, vitesse de marche arrière engagée » ;

- une troisième porte ET pour combiner les signaux de sortie du circuit pour activer le service de démarrage « en descente, vitesse de marche arrière engagée » et du circuit de détection de situation «en descente, vitesse de marche arrière engagée » ;

- une quatrième porte ET pour combiner la sortie de la troisième porte ET et la sortie du circuit pour tester la valeur de l'estimation de couple transmis ECT issue, du reste du dispositif de démarrage de l'invention à une valeur de seuil ECTSeuil et pour produire un ordre de desserrage du Frein de Parking Automatique de situation « en descente, vitesse de marche arrière engagée ».

**40.** Dispositif selon l'une des revendications 23 à 39, **caractérisé en ce qu'**il comporte un circuit pour détecter un excès de tangage dont la sortie est active si l'excès de tangage dépasse un seuil prédéterminé dans un registre, la sortie du circuit pour détecter un excès de tangage étant combinée par une première entrée inverseuse d'une porte ET, dont une autre entrée est connectée à la sortie du dispositif précédemment décrite sur laquelle se trouve l'ordre de desserrage du Frein de Parking Automatique, et la sortie de la porte ET produisant l'ordre de desserrage du Frein de Parking Automatique en dehors d'un excès de tangage.

**41.** Dispositif selon la revendication 40, **caractérisé en ce que** le circuit pour détecter un excès de tangage comporte une borne d'entrée qui reçoit un signal produit par le capteur d'angle de pente (7) qui présente une résolution suffisante pour détecter un excès de tangage, transmis à l'entrée d'un circuit pour produire un signal représentatif de la dérivée temporelle du signal de détection de l'angle d'inclinaison dont la sortie est connectée à une entrée d'un comparateur dont l'autre entrée est connectée à un registre maintenant une valeur de seuil d'excès de tangage. La sortie du comparateur est active quand la dérivée du signal représentatif de l'angle d'inclinaison du capteur 7 est supérieure au seuil prédéterminé.

**42.** Dispositif selon la revendication 41, **caractérisé en ce qu'**il comporte un générateur de valeurs de seuil d'excès de tangage en fonction de l'angle d'inclinaison produit par le capteur (7) pour produire la valeur de seuil d'excès de tangage.

**43.** Dispositif selon la revendication 42, **caractérisé en ce que** le générateur de valeurs de seuil d'excès de tangage comporte une première série de valeurs de seuil dans un premier sens de démarrage et une seconde série de valeurs de seuil dans un second sens de démarrage.

**44.** Dispositif selon l'une des revendications 23 à 43, **caractérisé en ce qu'**il comporte un circuit pour apporter un service d'anticipation de la dynamique du démarrage qui comporte un circuit pour calculer la dérivée temporelle D_Acc du signal Teta_Acc de degré d'enfoncement fourni par le capteur d'angle de pente (7 ; Figure 1) connecté à une première entrée d'un comparateur dont l'autre entrée est connecté à un générateur d'une valeur prédéterminée d'une valeur Seuil_Anticipe, de sorte que sa sortie est active si la valeur Seuil_Anticipe est dépassée dont le signal de sortie du comparateur est alors transmis à une première entrée d'une autre porte ET dont la seconde entrée est connectée à un circuit pour détecter que l'estimation de couple transmis ECT est en cours d'incrémentation par exemple en détectant l'évolution du compteur CPTR (83 ; Figure 6) et la sortie de l'autre porte ET est alors utilisée comme ordre de desserrage anticipé du Frein de Parking Automatique.

**45.** Dispositif selon la revendication 44, **caractérisé en ce qu'**il comporte aussi un générateur d'un seuil prédéterminé Seuil_Anticipe sous forme d'une table de valeurs de seuil adressée par la valeur du degré de pente mesuré par le capteur d'angle de pente (7), la valeur Seuil_Anticipe étant alors transmise au comparateur précité.

**46.** Dispositif selon l'une des revendications 23 à 46, **caractérisé en ce qu'**il comporte aussi un circuit pour prendre en compte le temps de réponse du Frein de Parking Automatique et le dynamisme du conducteur en exécutant une anticipation ou prédiction (ECT_prédit) sur l'estimation de couple transmis (ECT) qui comporte :

- un opérateur de prédiction pour exécuter une opération de la forme : ECT_prédit(Tr) = ECT + Tr x (d/dt).ECT, dans laquelle Tr est une valeur caractéristique du temps de réponse du système électromécanique et la dérivée temporelle ((d/dt).ECT) sur l'estimation de couple transmis est une estimation du dynamisme du conducteur ;
- un opérateur de test de la prédiction sur l'estimation de couple transmis (ECT_prédit) à au moins un seuil (S_min_prédit et/ou S_max_prédit) de test de desserrage à anticipation prédéterminé, enregistré et/ou calibrable dans une mémoire, de sorte que soit produit un ordre de desserrage anticipée du Frein de Parking Automatique si l'opérateur de test est activé.

**47.** Dispositif selon l'une des revendications 23 à 46, **caractérisé en ce qu'**il comporte un processeur présentant une architecture logicielle en quatre blocs :

- un bloc de saisie des données d'entrée parmi lesquelles le régime moteur Wm, la vitesse du véhicule Vv, l'angle de pente, le couple moyen estimé Cme, le degré d'enfoncement de la pédale d'accélérateur TETA_Acc, notamment prélevées sur le bus CAN (1) ;
- un bloc de traitement de signal appliqué sur les données d'entrée qui opère particulièrement des filtrages numériques sur tout ou partie des données d'entrée et réalise des corrections d'échelles ou d'unités ;
- un bloc d'initialisation des paramètres du procédé de l'invention comportant notamment les valeurs de seuil et les initialisations des compteurs ;
- un bloc d'exécution du procédé selon l'une des revendications 1 à 22 pour générer un ordre de desserrage du Frein de Parking Automatique.

**Claims**

**1.** Assistance method when starting a vehicle that includes a drive train and an automatic parking brake equipped with a means for executing a command to release or deactivate the automatic parking brake, **characterized in that** it consists in executing, at least after a drive train starting phase:

• a step for estimating a transmitted torque value (ECTthresh) which balances the vehicle in the slope;

• a loop consisting in executing an incremental calculation of an estimation of the torque actually transmitted (ECT) at the given instant as long as the estimation of the torque actually transmitted (ECT) is insufficient to exceed the transmitted torque estimation (ECTthresh); then

• a step for producing a command to release or deactivate the automatic parking brake.

2. Method according to Claim 1, **characterized in that** the step for estimating a transmitted torque valve which balances the vehicle in the slope includes a step for calculating a static model of the vehicle in the slope based on a measurement of an inclination angle delivered by a slope sensor (7) and on the knowledge of a determined value representative of the transmission ratio.

3. Method according to Claim 2, **characterized in that**, the measurement of an inclination angle being less than a given threshold, the estimation of a transmitted torque value which balances the vehicle in the slope is increased by a determined value.

4. Method according to Claim 3, **characterized in that** the determined value for increasing the estimation of a transmitted torque value which balances the vehicle in the slope depends on the measurement of the inclination angle.

5. Method according to Claim 1, **characterized in that** the incremental calculation step (32) includes:

- a step for reading an effective average torque value (Cme) associated with the dynamic state of the drive train;
- a step for reading an engine speed value (Wm);
- a step for calculating the temporal drift of the engine speed;
- a step for determining the moment of inertia of the drive train (Jmot) and for calculating the resisting torque in the form of a product of the moment of inertia of the drive train by the temporal drift of the engine speed;

- a step for determining a transmitted torque estimation according to a relationship in the form:

$$ECT = Cme - Jmot \times \frac{dWm}{dt}.$$

6. Method according to Claim 5, **characterized in that** it includes a step for resynchronizing the reading of an effective average torque value (Cme) and an engine speed value (Wm) so that each pair of values (Cme, Wm) corresponds to a same time interval.

7. Method according to Claim 6, **characterized in that** it consists in adding a predetermined delay, preferably equal to three periods of passage through top dead centre of the heat engine of the drive train, to the value for resynchronization of the estimated average torque value to take account in particular of the delay pending filling of the manifold and execution of the ignition.

8. Method according to Claim 6 or 7, **characterized in that** the resynchronization step consists in applying the resynchronization to the drift value (D_Wm) of the engine speed (Wm) between two samples separated by a resynchronization duration in particular according to the relationship: D_Wm = [Wm(8)-Wm(1)]/duration, in which "duration" determines the resynchronization period and Wm(1) and Wm(8) the resynchronization period start and end values.

9. Method according to one of Claims 5 to 8, **characterized in that** the step for estimating the transmitted torque (ECT) includes:

- a step (S4) for comparing a transmitted torque estimation value (ECT) with a predetermined threshold value (ECTthresh);
- if the predetermined threshold value (ECTthresh) is exceeded, a step (S5) for testing the output value of a counter (S3), incremented on each transmitted torque estimation step (ECT), relative to the predetermined threshold value (Smin_loop_Delay),
- if the predetermined threshold value (Smin_loop_Delay) is exceeded, a step for producing the command to authorize the releasing of the automatic parking brake.

10. Method according to Claim 9, **characterized in that** the transmitted torque estimation step ECT also includes a step for executing a predetermined offset so as to reduce the disturbing effect of the starting and/or stopping of certain secondary consumers (Consumers) of energy or power supplied by the heat engine, by performing the following operation:

$$ECT\_Corr\_k = ECT\_k + g(Consumers)$$

A preliminary step for determining a range within which the engine can be considered to be idle and a range during which an offset g(Consumers) on the transmitted torque estimation can be executed.

11. Method according to Claim 10, **characterized in that** the step for executing an offset is performed on completion of a test (103) during which four conditions are combined:

$$Wm \leq Smax\_Wm\_idle$$

$$ABS(D\_Wm) \leq Smax\_D\_M\_idle$$

$$THETA\_Acc \leq Smax\_acc\_idle$$

$$D\_Acc == 0$$

conditions in which:

Smax_Wm_idle represents a threshold value below which the engine speed indicates that the engine is in the idle state or at idle speed;
Smax_D_M_idle represents a threshold value below which the absolute value ABS(D_Wm) of the temporal drift of the engine speed D_Wm indicates that the engine is in the idle state or at idle speed;
Smax_acc_idle represents a threshold value below which the degree of depression of the accelerator pedal THETA-Acc indicates that the engine is in the idle state or at idle speed;
D_Acc represents the temporal drift of the degree of depression THETA-Acc of the accelerator pedal which is negative when the driver lifts the foot off the accelerator pedal;

such that, if the test (103) is negative, the control returns to the initialization (102) of a counter (CPTR), the drive train being assumed to be unconnected to the drive wheels;
and such that, if the test (103) is positive, the control switches to a test (104) in which the counter (CPTR) is checked to see if it is below a predetermined threshold value (CPTR_thresh);
such that, if the test (104) is positive, the control switches to a step (105) during which an "offset" value, initially zero when the counter (CPTR) is itself initialized in the step (102), is increased by the current estimation value ECT; then, the counter value (CPTR) being incremented by an increment during a step (106) and the control returning to the test step (103);
such that, if the test (104) is negative, the offset value is transmitted to a routine (107) for calculating an offset value for the transmitted torque estimation ECT, offset value denoted "offset_ECT" which is equal to the ratio of the "offset" value calculated during the step (105) with the counter value (CPTR_thresh).

12. Method according to one of the preceding claims, **characterized in that** it comprises a step for producing driver activity information such that the releasing of the automatic parking brake is refused if the accelerator pedal is raised.

13. Method according to one of the preceding claims, **characterized in that** it includes a step for detecting a start request when the drive train is not engaged.

14. Method according to Claim 13, **characterized in that** the step consists, without using any clutch pedal depression sensor, in detecting the engaged stage using two maps of the transmitted torque estimation as a function of the degree of depression of the accelerator pedal respectively established when the wheels are engaged and when the wheels are not engaged and by comparing the value of the transmitted torque estimation to each of the map values addressed by the measurement of the degree of depression of the accelerator pedal in order, if the comparison to the first map is positive, to produce information characteristic of a disengaged state and, if the comparison to the second map is positive, to produce information characteristic of an engaged state.

**15.** Method according to Claim 13, **characterized in that** the step consists in using an on/off clutch pedal depression sensor to produce information characteristic of an engaged or disengaged state.

**16.** Method according to one of the preceding claims, **characterized in that** it includes a step for detecting the no-load state, which consists in:

- comparing the estimated engine torque information (Cme) to two functions for estimating the no-load speed in rotation with a positive transmitted torque estimation fp() and in rotation with a negative transmitted torque estimation fn();
- applying to the function fp() a no-load gain (G_Cme_PV) applied to the estimated engine torque (Cme), an offset (Offset_Cme_PV) on the estimated engine torque value in the no-load position, and the current value (Cme) to produce a no-load speed value in rotation with an a priori positive transmitted torque estimation;
- applying to the function fn() a no-load gain (G_Cme_NV) applied to the estimated engine torque (Cme), an offset (Offset_Cme_NV) on the estimated engine torque value in the no-load position, and the current value (Cme) to produce a no-load speed value in rotation with an a priori negative transmitted torque estimation;
- comparing the engine speed value (Wm) to determine whether the current state is a no-load state, in rotation with a positive transmitted torque estimation or with a negative transmitted torque estimation;
- authorizing the releasing of the automatic parking brake only if no no-load state is detected.

**17.** Method according to one of the preceding claims, **characterized in that** it comprises a step for detecting saturation of the heat engine at high speed so that the releasing of the automatic parking brake is prohibited at saturation speed.

**18.** Method according to one of the preceding claims, **characterized in that** it includes a step for producing a "flat" starting service without threshold on pressing the accelerator pedal, which consists:

- in producing a command to release the parking brake solely on determination that the transmitted torque estimation ECT is greater than the predetermined threshold ECTthresh and particularly without testing a threshold on pressing the accelerator pedal;
- in initializing a state variable on starting the vehicle to indicate that the accelerator pedal has not yet been depressed, the variable being represented by Acc_Was_NonZero = 0;
- in reading a variable representative of the idle state of the engine (idle);
- in processing the variable Acc_Was_NonZero so that it remains at "1" as soon as the accelerator has been pressed and until the idle variable returns to "1";

and **in that** it then consists in authorizing the "flat" starting when the variable Acc_Was_NonZero is "0" and in testing that the transmitted torque estimation ECT is greater than a threshold value ECTthresh to authorize the releasing of the automatic parking brake and thus ensuring the starting-up of the vehicle while keeping it to a certain acceleration range.

**19.** Method according to Claim 18, **characterized in that** it consists in extending the "flat" starting service to a downhill starting service, with first gear engaged.

**20.** Method according to Claim 18, **characterized in that** it consists in extending the "flat" starting service to a downhill starting service, with reverse gear engaged.

**21.** Method according to one of the preceding claims, **characterized in that** it includes a step for detecting an excess pitch and a step for preventing the releasing of the automatic parking brake in a starting situation if the pitch of the vehicle applied, for example, by an excessive movement of the vehicle passengers exceeds a certain predetermined threshold.

**22.** Method according to one of the preceding claims, **characterized in that** it includes a step for determining an anticipation term on the command to release the automatic parking brake as a function of predetermined anticipation values which consists, when generating the command to release the automatic parking brake, in also executing a step for measuring the degree of depression of the accelerator pedal Teta_Acc, then in measuring a temporal drift of the depression degree signal Teta_Acc, or D_Acc, and in comparing this instantaneous drift value D_Acc with a predetermined threshold Thresh-Anticipated, so that, if the speed of variation of the degree of depression D_Acc is greater than a value Thresh_Anticipated, the loop for incrementing the transmitted torque estimation value ECT is interrupted before the test (33; Figure 2) is true and to produce, in an anticipated manner, the command to release the automatic parking brake.

23. Hill start assistance device for a vehicle comprising a drive train and an automatic parking brake equipped with a means (7, 8) for executing a command to release or deactivate the parking brake by implementing the method according to at least one of the preceding claims, **characterized in that** it comprises a computer (5) for a release command connected to a sensor (7) of the degree of slope in which the vehicle is engaged and a sensor delivering information concerning the speed of rotation of the drive train of the vehicle and **characterized by** the fact that the computer (5) includes a means for estimating the transmitted torque (ECT) connected to a first input of a comparison means, a second input of which is connected to a means for producing a transmitted torque threshold value corresponding to the maintaining of the vehicle, so that an output terminal of said comparison means produces a release command (11) intended for the electric parking brake (7, 8).

24. Device according to Claim 23, **characterized in that** it includes:

   • a first module for reading the effective average torque Cme which is supplied by a computer (3) of the engine in the form of information circulating on the vehicle bus (1),
   • a second module for reading the instantaneous speed Wm of rotation of the heat engine which is supplied by the engine computer (3) in the form of information circulating on the vehicle bus (1),

   • a third module for calculating the temporal drift $\dfrac{dWm}{dt}$ of the rotation speed at the output of the drive train based on rotation speed or engine speed data taken by the second module ;
   • a fourth module for calculating the product of a value of the moment of inertia Jmot characteristic of the inertia of the engine and the output value of said third module;
   • a fifth module for subtracting the output value of the fourth module, presented to a subtraction input of the fifth module, from the output valve of said first module so that its output presents an instantaneous transmitted torque estimation valve produced according to a relationship = $\mathtt{ECT\ =\ Cme\ -\ Jmot\ \times\ \dfrac{dWm}{dt}}$ .

25. Device according to one of Claims 23 or 24, **characterized in that**, the estimated engine torque (Cme) and engine speed (Wm) values being supplied in frames of a bus (1) by an engine control computer (3), it includes a resynchronization circuit (67) .

26. Device according to Claim 25, **characterized in that** the resynchronization circuit (67) includes:

   - a memory which contains a table on a cycle of pairs of data such that the order number of a value representative of a first word received on its first input is associated with an order number of a value representative of the order number of a second word received,
   - registers for series of successive values of the first word and/or of the second word, and
   - a means for, according to the order number associations of the abovementioned memory, applying to the output a pair of a first word and of a second word corresponding to one and the same calculation instant and for presenting the pair of resynchronized words at output terminals (68, 69).

27. Device according to Claim 25 or 26, **characterized in that** the resynchronization circuit (67) works mainly on the engine speed and can be used to exploit an offset in the mechanism for the provision of pairs of words (Cme, Wm), a characteristic effect during the acceleration of the heat engine and which includes:

   a synchronization register (70) for the transmitted torque estimation (Cme);
   a sequencer (71) which receives a signal (56) indicating top dead centre and which transmits write (72) and read (73) commands to the register (70) ;
   a register (74) for an available synchronized transmitted torque estimation value;

a stack (76) of registers in which a plurality of successive values of the engine speed (Wm) acquired at successive instants over the CAN bus (1) is kept;
a differentiator circuit (79) which comprises:

- a positive input connected to a reader output of the stack (76) on which the oldest value of the engine speed Wm kept in the stack (76) is available, and
- a negative input to which the most recent available engine speed value also on the input terminal (66) of the module (67) is connected;
- an input (80) which receives a representative value "duration" of the duration elapsed during acquisition between the oldest value, and the most recent value, so that, at the output (81) of the differentiator circuit (79), a valve representing a synchronized value of the averaged temporal drift of the engine speed is available according to a relationship in the form:

$$D\_Wm_{sync} = [Wm(8) - Wm(1)]/duration$$

loaded into a register (82).

28. Device according to Claim 27, **characterized in that** a write control terminal of the register (82) keeping a synchronized value of the averaged temporal drift of,the engine speed is connected to the sequencer (71) that is managed by a register (86) in which a temporal offset value or delay $\Delta T$ is saved which corresponds to a desired delay for transmission of the synchronized values to the rest of the estimator so that it is possible to take account in particular:

- of the delay for filling the manifold of the heat engine, and
- of the ignition delay when the heat engine is in the acceleration phase as is the case in a hill start.

29. Device according to Claim 24, **characterized in that** it includes a counter (90) which keeps a numeric value CPTR and updates it on each event presented to its input denoted "+" while increasing it by a predetermined value such as "1";
an input (91) on which the value ECT_k is loaded, a current value for incrementing the transmitted torque estimation and which is connected, on the one hand, to the input of a circuit (93) for detecting the arrival of a value ECT-k and to a first input of a comparator (92);
the detection output of the module (93) for detecting the arrival of a sample ECT-k is connected to the "+" input for controlling the incrementing of the counter (90) of which the read output terminal is connected to a first input of a comparator (93);
a register (94) containing a threshold value ECTthresh, and transmitted to a second input of the comparator (92);
the comparator (92) includes a first output (96) and a second output (95), complementing one another, so that, if the test performed by the comparator (92) is positive, the first output (96) switches to the active state and is connected to a first input of an AND gate (97), while the second output (95) switches to the inactive state and is connected to an input terminal for resetting to an initial value such as the value "0" of the counter (90);
a second comparator (98) of which a first input receives the count value CPTR available in the counter (90) and of which a second input is connected to a register (99) keeping the maximum count value at the end of which the release authorization can be executed;
so that, when the test performed by the second comparator (98) is positive, its output switches to the active state and is connected to a second input of the AND gate (97) so that the output (100) of the AND gate (97) switches to the active state to indicate an authorization to release the automatic parking brake.

30. Device according to Claim 29, **characterized in that** it includes a register (99) containing a value (Smin_Lop_Delay) determined as a function of the sampling period or loop rate and of the desired delay between the first overshoot by the estimated transmitted torque value ECT of the threshold value ECT thresh and the performance of the release command for the parking brake FPA, the register (99) including a means for writing a duly determined value of Smin_Lop_Delay which is activated on the initialization of the vehicle or during its manufacture or during its maintenance using a production tool known to those skilled in the art, or else upon the detection of a type of driver performed using the onboard computer which transmits over the bus 1 a characteristic value of Smin_Lop_Delay associated with the detected driver using, for example, the ignition key or the driver type according to an algorithm for detecting the type of drive conducted by the driver.

31. Device according to Claim 30, **characterized in that**, using an adder which performs the operation: ECT_Corr_k = ECT_k + g(Consumers), the transmitted torque estimation value ECT received at the terminal (91) also receives a predetermined offset so as to reduce the disturbing effect of the starting and stopping of certain secondary consumers of energy or power supplied by the heat engine, the offset being performed upstream of the detection circuit (91) and of the input of the comparator (92).

32. Device according to Claim 31, **characterized in that** it includes a circuit for executing an offset according to the no-load or load state.

33. Device according to one of Claims 23 to 32, **characterized in that** it includes a circuit (150-172) for detecting the activity of the driver using two comparators (151, 152) for the temporal drift (D_Acc) of the degree of depression of the accelerator pedal to a depression degree interval (SMIN_D_Acc_Takeoff, SMAX_D_Acc_Takeoff) in two registers (153, 154) and using an AND gate (156) to validate the command to release the automatic parking brake.

34. Device according to one of Claims 23 to 33, **characterized in that** it includes a circuit (160-172) for detecting the engaged or unengaged state of the drive train using a plurality of maps (163, 164) containing a series of transmitted torque estimation values (ECT) as a function of the degree of depression of the accelerator pedal established according to whether the clutch is or is not active, using an AND gate (171) to validate the production of the command to release the automatic parking brake as a function of the type of driver, of the degree of depression of the accelerator pedal (TETA_Acc) and of the transmitted torque estimation (ECT), an AND gate (171) validating the command to release the automatic parking brake.

35. Device according to one of Claims 23 to 34, **characterized in that** it includes a circuit (180-195) for detecting the no-load state of the vehicle according to the direction of rotation which comprises two generators (181, 182) for a function determining the no-load engine speed, connected to two comparators (190, 191) of the instantaneous engine speed value (Wm), and two AND gates (192, 193) for validating a command to release the automatic parking brake.

36. Device according to one of Claims 23 to 35, **characterized in that** it includes a circuit (200-206) for determining a saturation state of the heat engine which comprises a comparator (201) for determining the engine speed (Wm) and applying or not applying a corrected value in a means (202, 203) for correcting estimated engine torque values (Cme).

37. Device according to one of Claims 23 to 36, **characterized in that** it includes a circuit for implementing a "flat" starting service which mainly comprises:

- a circuit for activating the flat starting service when configuring the vehicle during production, during maintenance or upon detection of the type of driver or of the driver when the latter takes its place in the vehicle which produces a logic signal which is "0" if the service is not implemented and "1" if the service is implemented;
- a "flat" situation detection circuit for detecting that the signal representative of the inclination angle produced by the slope angle sensor (7) is an absolute value less than a threshold value saved in an appropriate register and representative of the "flat" situation limit;
- a first AND gate for combining the output signals from the circuit for activating the flat starting service and from the "flat" situation detection circuit;
- a circuit for generating the variable Acc_Was_NonZero which comprises a comparator of the degree of depression of the accelerator pedal to a very low predetermined depression threshold and a zero reset circuit as soon as the idle variable obtained from the rest of the inventive starting device returns to "0";
- a circuit for testing the value of the transmitted torque estimation ECT obtained from the rest of the inventive starting device against a threshold value ECTthresh and for producing a command to release the automatic parking brake;
- a second AND gate for combining the "flat" release command obtained from the circuit for testing the value of the transmitted torque estimation ECT at the output of the first AND gate and the output of which is connected to the controller of the automatic parking brake's electric motor.

38. Device according to one of Claims 23 to 37, **characterized in that** it includes a circuit for implementing a downhill starting service, with first gear engaged, which comprises:

- a circuit for activating the "downhill, first gear engaged" starting service when configuring the vehicle during production, during maintenance or upon the detection of the type of driver or of the driver when the latter takes its place in the vehicle which produces a logic signal which is "0" if the service is not implemented and "1" if the service is implemented;

- a "downhill, first gear engaged" situation detection circuit for detecting that the signal representative of the inclination angle produced by the slope angle sensor (7) is less than a negative threshold value saved in an appropriate register and representative of the "downhill, first gear engaged" situation limit;

- a third AND gate for combining the output signals from the circuit for activating the "downhill, first gear engaged" starting service and from the "downhill, first gear engaged" situation detection circuit;

- a fourth AND gate for combining the output of the third AND gate and the output of the circuit for testing the value of the transmitted torque estimation ECT obtained from the rest of the inventive starting device against a threshold value ECTthresh and for producing a command to release the automatic parking brake in a "downhill, first gear engaged" situation.

39. Device according to one of Claims 23 to 38, **characterized in that** it includes a circuit for implementing a "reverse gear" downhill starting service which comprises:

- a circuit for activating the "downhill, reverse gear engaged" starting service when configuring the vehicle during production, during maintenance or upon detection of the type of driver or of the driver when the latter takes its place in the vehicle which produces a logic signal which is "0" if the service is not implemented and "1" if the service is implemented;

- a "downhill, reverse gear engaged" situation detection circuit for detecting that the signal representative of the inclination angle produced by the slope angle sensor (7) is greater than a positive threshold value saved in an appropriate register and representative of the "downhill, reverse gear engaged" situation limit;

- a third AND gate for combining the output signals from the circuit for activating the "downhill, reverse gear engaged" starting service and from the "downhill, reverse gear engaged" situation detection circuit;

- a fourth AND gate for combining the output of the third AND gate and the output of the circuit for testing the value of the transmitted torque estimation ECT obtained from the rest of the inventive starting device against a threshold value ECTthresh and for producing a command to release the automatic parking brake in a "downhill, reverse gear engaged" situation.

40. Device according to one of Claims 23 to 39, **characterized in that** it includes a circuit for detecting an excess pitch of which the output is active if the excess pitch exceeds a predetermined threshold in a register, the output of the circuit for detecting an excess pitch being combined by a first inverting input of an AND gate, of which another input is connected to the output of the device described previously on which the command to release the automatic parking brake is located, and the output of the AND gate producing the command to release the automatic parking brake outside of an excess pitch.

41. Device according to Claim 40, **characterized in that** the circuit for detecting an excess pitch includes an input terminal which receives a signal produced by the slope angle sensor (7) which has sufficient resolution for detecting an excess pitch, transmitted to the input of a circuit for producing a signal representative of the temporal drift of the inclination angle detection signal, the output of which is connected to an input of a comparator of which the other input is connected to a register keeping an excess pitch threshold value, the output of the comparator being active when the drift of the signal representative of the inclination angle from the sensor 7 is greater than the predetermined threshold.

42. Device according to Claim 41, **characterized in that** it includes a generator of excess pitch threshold values as a function of the inclination angle produced by the sensor (7) to produce the excess pitch threshold value.

43. Device according to Claim 42, **characterized in that** the generator of excess pitch threshold values includes a first series of threshold values in a first starting direction and a second series of threshold values in a second starting direction.

44. Device according to one of Claims 23 to 43, **characterized in that** it includes a circuit for providing a service for anticipating the starting dynamics which includes a circuit for calculating the temporal drift D_Acc of degree of depression signal Teta_Acc supplied by the slope angle sensor (7; Figure 1) connected to a first input of a comparator of which the other input is connected to a generator of a predetermined value for a Thresh_Anticipated value, so that its output is active if the Thresh_Anticipated value is exceeded, of which the output signal from the comparator is then transmitted to a first input of another AND gate of which the second input is connected to a circuit for detecting that the transmitted torque estimation ECT is currently being incremented for example by detecting the trend of the counter CPTR (83; Figure 6) and the output of the other AND gate is then used as command for anticipated release of the automatic parking brake.

45. Device according to Claim 44, **characterized in that** it also includes a generator of a predetermined threshold Thresh_Anticipated in the form of a table of threshold values addressed by the value of the degree of slope measured by the slope angle sensor (7), the value Thresh_Anticipated then being transmitted to the abovementioned comparator.

46. Device according to one of Claims 23 to 45, **characterized in that** it also includes a circuit for taking into account the response time of the automatic parking brake and the dynamism of the driver by executing an anticipation or prediction (ECT_predicted) on the transmitted torque estimation (ECT) which comprises:

- a prediction operator for executing an operation of the form: $ECT\_predicted(Tr) = ECT + Tr \times (d/dt).ECT$, in which Tr is a value characteristic of the response time of the electromechanical system and the temporal drift ((d/dt).ECT) on the transmitted torque estimation is an estimation of the dynamism of the driver;
- an operator for testing the prediction on the transmitted torque estimation (ECT_predicted) against at least one threshold (S_min_predicted and/or S_max_predicted) for testing release with predetermined anticipation, saved and/or calibratable in a memory, so that a command for anticipated release of the automatic parking brake is produced if the test operator is activated.

47. Device according to one of Claims 23 to 46, **characterized in that** it includes a processor having a four-block software architecture:

- a block for entering input data, including the engine speed Wm, the vehicle speed Vv, the slope angle, the estimated average torque Cme, the degree of depression of the accelerator pedal TETA_Acc, sampled in particular from the CAN bus (1);
- a signal processing block applied to the input data which in particular applies digital filterings to all or some of the input data and produces scale or unit corrections;
- a block for initializing the parameters of the inventive method comprising in particular the threshold values and the counter initializations;
- a block for executing the method according to one of Claims 1 to 22 for generating a command to release the automatic parking brake.

## Patentansprüche

1. Starthilfeverfahren für ein Fahrzeug, das eine Antriebseinheit und eine automatische Parkbremse aufweist, die mit einer Einrichtung ausgestattet ist, um einen Löse- oder Deaktivierungsbefehl der automatischen Parkbremse auszuführen, **dadurch gekennzeichnet, dass** es darin besteht, zumindest nach einer Startphase der Antriebseinheit, auszuführen:

• einen Schritt der Schätzung eines Werts eines übertragenen Drehmoments (ECT-seuil), das das Fahrzeug im Gefälle ausbalanciert;
• eine Schleife, die darin besteht, eine inkrementelle Berechnung einer Schätzung des tatsächlich im gegebenen Zeitpunkt übertragenen Drehmoments (ECT) auszuführen, so lange die Schätzung des tatsächlich übertragenen Drehmoments (ECT) nicht ausreicht, um die Schätzung des übertragenen Drehmoments (ECT-seuil) zu übertreffen; dann
• einen Schritt der Erzeugung eines Befehls zum Lösen oder Deaktivieren der automatischen Parkbremse.

2. Verfahren nach Anspruch 1, **dadurch gekennzeichnet, dass** der Schritt der Schätzung eines Werts eines übertragenen Drehmoments, das das Fahrzeug im Gefälle ausbalanciert, einen Schritt aufweist, um ein statisches Modell des Fahrzeugs im Gefälle ausgehend von einem Messwert eines Neigungswinkels, der von einem Gefällesensor (7) geliefert wird, und der Kenntnis eines bestimmten Werts zu berechnen, der für das Übersetzungsverhältnis repräsentativ ist.

3. Verfahren nach Anspruch 2, **dadurch gekennzeichnet, dass**, wenn der Messwert eines Neigungswinkels geringer als eine gegebene Schwelle ist, die Schätzung eines Werts eines übertragenen Drehmoments, das das Fahrzeug im Gefälle ausbalanciert, um einen bestimmten Wert erhöht wird.

4.  Verfahren nach Anspruch 3, **dadurch gekennzeichnet, dass** der bestimmte Erhöhungswert der Schätzung eines Werts eines übertragenen Drehmoments, das das Fahrzeug im Gefälle ausbalanciert, vom Messwert des Neigungswinkels abhängt.

5.  Verfahren nach Anspruch 1, **dadurch gekennzeichnet, dass** der Schritt der inkrementellen Berechnung (32) aufweist:

    - einen Schritt des Ablesens eines Werts eines mittleren wirksamen Drehmoments (Cme), der dem dynamischen Zustand der Antriebseinheit zugeordnet ist;
    - einen Schritt des Ablesens eines Drehzahlwerts des Motors (Wm);
    - einen Schritt der Berechnung der zeitlichen Ableitung der Motordrehzahl;
    - einen Schritt der Bestimmung des Trägheitsmoments der Antriebseinheit (Jmot) und der Berechnung des Widerstandsmoments in Form eines Produkts aus dem Trägheitsmoment der Antriebseinheit und der zeitlichen Ableitung der Motordrehzahl;

    - einen Schritt der Bestimmung einer Schätzung eines übertragenen Drehmoments gemäß einer Beziehung der Form: $ECT = Cme - Jmot \times \dfrac{dWm}{dt}$.

6.  Verfahren nach Anspruch 5, **dadurch gekennzeichnet, dass** es einen Schritt der Resynchronisierung des Ablesens eines Werts eines wirksamen mittleren Drehmoments (Cme) und eines Drehzahlwerts des Motors (Wm) aufweist, damit jedes Wertepaar (Cme, Wm) einem gleichen Zeitintervall entspricht.

7.  Verfahren nach Anspruch 6, **dadurch gekennzeichnet, dass** es darin besteht, eine vorbestimmte Zeitspanne, vorzugsweise gleich drei Durchgangsperioden durch den oberen Totpunkt des Verbrennungsmotors der Antriebseinheit, zum Resynchronisierungswert des Werts des geschätzten mittleren Drehmoments hinzuzufügen, um insbesondere die Füllwartezeit des Kollektors und die Ausführung des Zündens zu berücksichtigen.

8.  Verfahren nach Anspruch 6 oder 7, **dadurch gekennzeichnet, dass** der Schritt der Resynchronisierung darin besteht, die Resynchronisierung an den abgeleiteten Wert (D_Wm) der Motordrehzahl (Wm) zwischen zwei getrennten Tastproben durch eine Resynchronisierungsdauer insbesondere gemäß der Beziehung: D_Wm = [Wm (8)-Wm(1)]/Dauer anzuwenden, in der "Dauer" die Resynchronisierungsperiode und Wm(1) und Wm(8) die Anfangs- und Endwerte der Resynchronisierungsperiode bestimmen.

9.  Verfahren nach einem der Ansprüche 5 bis 8, **dadurch gekennzeichnet, dass** der Schritt des Schätzens des übertragenen Drehmoments (ECT) aufweist:

    - einen Schritt des Vergleichs (S4) eines Schätzwerts eines übertragenen Drehmoments (ECT) mit einem vorbestimmten Schwellwert (ECTseuil);
    - wenn der vorbestimmte Schwellwert (ECTseuil) überschritten wird, einen Schritt (S5) des Tests des Ausgangswerts eines Zählers (S3), der in jedem Schätzschritt eines übertragenen Drehmoments (ECT) inkrementiert wird, im Vergleich mit einem vorbestimmten Schwellwert (Smin_loop_Delay),
    - wenn der vorbestimmte Schwellwert (Smin_loop_Delay) überschritten wird, einen Schritt der Erzeugung eines Freigabebefehls des Lösens der automatischen Parkbremse.

10. Verfahren nach Anspruch 9, **dadurch gekennzeichnet, dass** der Schätzschritt eines übertragenen Drehmoments (ECT) außerdem einen Schritt aufweist, um eine vorbestimmte Verschiebung auszuführen, um die Störwirkung des Einschaltens und/oder des Ausschaltens bestimmter Sekundärverbraucher (Verbraucher) von vom Verbrennungsmotor gelieferter Energie oder Leistung zu reduzieren, indem der folgende Vorgang durchgeführt wird:

$$ECT\_Corr\_k = ECT\_k + g(Verbraucher)$$

und einen vorhergehenden Schritt aufweist, um einen Bereich, in dem der Motor als im Ruhezustand angesehen werden kann, und einen Bereich zu bestimmen, während dem eine Verschiebung g(Verbraucher) an der Schätzung des übertragenen Drehmoments ausgeführt werden kann.

11. Verfahren nach Anspruch 10, **dadurch gekennzeichnet, dass** der Schritt zur Ausführung einer Verschiebung nach einem Test (103) ausgeführt wird, während dem vier Bedingungen kombiniert werden:

$$Wm \leq Smax\_Wm\_idle$$

$$ABS(D\_Wm) \leq Smax\_D\_M\_idle$$

$$THETA\_Acc \leq Smax\_acc\_idle$$

$$D\_Acc == 0$$

Bedingungen, bei denen:

Smax_Wm_idle einen Schwellwert darstellt, unter dem die Motordrehzahl anzeigt, dass der Motor im Ruhezustand oder im Leerlaufbetrieb ist;
Smax_D_M_idle einen Schwellwert darstellt, unter dem der Absolutwert ABS (D_Wm) der zeitlichen Ableitung der Motordrehzahl D_Wm anzeigt, dass der Motor im Ruhezustand oder im Leerlaufbetrieb ist;
Smax_acc_idle einen Schwellwert darstellt, unter dem der Eindrückgrad des Gaspedals THETA_Acc anzeigt, dass der Motor im Ruhezustand oder im Leerlaufbetrieb ist;
D_Acc die zeitliche Ableitung des Eindrückgrads THETA_Acc des Gaspedals darstellt, die negativ ist, wenn der Fahrer den Fuß vom Gaspedal hebt;

so dass, wenn der Test (103) negativ ist, die Steuerung zur Initialisierung (102) eines Zählers (CPTR) zurückgeht, wobei die Antriebseinheit als nicht mit den angetriebenen Rädern verbunden angesehen wird;
und so dass, wenn der Test (103) positiv ist, die Steuerung zu einem Test (104) übergeht, in dem nachgesehen wird, ob der Zähler (CPTR) unter einem vorbestimmten Schwellwert (CPTR_seuil) ist;
so dass, wenn der Test (104) positiv ist, die Steuerung zu einem Schritt (105) übergeht, während dem ein Verschiebungswert "Offset", der anfangs Null ist, wenn der Zähler (CPTR) selbst im Schritt (102) initialisiert wird, um den Wert der laufenden Schätzung ECT erhöht wird;
dann, wenn der Zählerwert (CPTR) in einem Schritt (106) um einen Schritt inkrementiert wird, die Steuerung zum Testschritt (103) zurückkehrt;
so dass, wenn der Test (104) negativ ist, der Offset-Wert an eine Rechenroutine (107) eines Verschiebungswerts der Schätzung eines übertragenen Drehmoments ECT übertragen wird, mit "Offset_ECT" bezeichneter Verschiebungswert, der gleich dem Verhältnis des im Schritt (105) berechneten Werts "Offset" zum Wert (CPTR_seuil) des Rechners ist.

12. Verfahren nach einem der vorhergehenden Ansprüche, **dadurch gekennzeichnet, dass** es einen Schritt aufweist, um eine Aktivitätsinformation des Fahrers zu erzeugen, so dass das Lösen der automatischen Parkbremse im Fall des Hochsteigens des Gaspedals verweigert wird.

13. Verfahren nach einem der vorhergehenden Ansprüche, **dadurch gekennzeichnet, dass** es einen Schritt aufweist, um eine Startanforderung zu erfassen, während die Antriebseinheit nicht eingekuppelt ist.

14. Verfahren nach Anspruch 13, **dadurch gekennzeichnet, dass** der Schritt ohne Verwendung eines Sensors des Eindrückens des Kupplungspedals darin besteht, den eingekuppelten Zustand mit Hilfe von zwei Kennfeldern der Schätzung eines übertragenen Drehmoments in Abhängigkeit vom Eindrückgrad des Gaspedals zu erfassen, die erstellt werden, wenn die Räder eingekuppelt sind und wenn die Räder nicht eingekuppelt sind, und indem der Wert der Schätzung eines übertragenen Drehmoments mit jedem der Kennfeldwerte verglichen wird, die vom Messwert des Eindrückgrads des Gaspedals angesteuert werden, um, wenn der Vergleich mit dem ersten Kennfeld positiv ist, eine für einen ausgekuppelten Zustand kennzeichnende Information zu erzeugen, und, wenn der Vergleich mit dem zweiten Kennfeld positiv ist, eine für einen eingekuppelten Zustand kennzeichnende Information zu erzeugen.

15. Verfahren nach Anspruch 13, **dadurch gekennzeichnet, dass** der Schritt darin besteht, unter Verwendung eines Ein-Aus-Sensors des Eindrückens des Kupplungspedals eine für einen eingekuppelten oder ausgekuppelten Zustand kennzeichnende Information zu erzeugen.

16. Verfahren nach einem der vorhergehenden Ansprüche, **dadurch gekennzeichnet, dass** es einen Schritt aufweist, um die Leerlaufdrehzahl zu erfassen, der darin besteht:

    - die Information eines geschätzten Motordrehmoments (Cme) mit zwei Schätzfunktionen einer Leerlaufdrehzahl in Rotation mit einer Schätzung eines positiven übertragenen Drehmoments fp() und in Rotation mit einer Schätzung eines negativen übertragenen Drehmoments fn() zu vergleichen;
    - an die Funktion fp() eine Leerlaufverstärkung (G_Cme_PV), die an das geschätzte Motordrehmoment (Cme) angewendet wird, eine Verschiebung (Offset_Cme_PV) an den Wert des geschätzten Motordrehmoments in der Leerlaufstellung, und den laufenden Wert (Cme) anzuwenden, um einen Leerlaufdrehzahlwert in Rotation mit einer Schätzung des positiven übertragenen Drehmoments a priori zu erzeugen:
    - an die Funktion fn() eine Leerlaufverstärkung (G_Cme_NV), die an das geschätzte Motordrehmoment (Cme) angewendet wird, eine Verschiebung (Offset_Cme_NV) an den Wert des geschätzten Motordrehmoments in Leerlaufstellung, und den laufenden Wert (Cme) anzuwenden, um einen Leerlaufdrehzahlwert in Rotation mit einer Schätzung des negativen übertragenen Drehmoments a priori zu erzeugen;
    - um zu bestimmen, ob man sich in einem Leerlaufbetrieb in Rotation mit einer Schätzung eines positiven übertragenen Drehmoments oder mit einer Schätzung eines negativen übertragenen Drehmoments befindet, den Wert der Motordrehzahl (Wm) zu vergleichen;
    - das Lösen der automatischen Parkbremse nur freizugeben, wenn keine Leerlaufdrehzahl erfasst wird.

17. Verfahren nach einem der vorhergehenden Ansprüche, **dadurch gekennzeichnet, dass** es einen Schritt der Erfassung der Sättigung des Verbrennungsmotors bei hoher Drehzahl aufweist, damit das Lösen der automatischen Parkbremse bei Sättigungsdrehzahl gesperrt wird.

18. Verfahren nach einem der vorhergehenden Ansprüche, **dadurch gekennzeichnet, dass** es einen Schritt aufweist, um einen "in der Ebene"-Startdienst ohne Schwelle beim Drücken des Gaspedals zu erzeugen, der darin besteht:

    - einen Befehl des Lösens der Parkbremse nur bei der Feststellung zu erzeugen, das die Schätzung eines übertragenen Drehmoments ECT höher als die vorbestimmte Schwelle ECTseuil ist, und insbesondere, ohne eine Schwelle beim Drücken des Gaspedals zu testen;
    - eine Zustandsvariable beim Start des Fahrzeugs zu initialisieren, um anzuzeigen, dass das Gaspedal noch nicht eingedrückt wurde, wobei die Variable durch Acc_Was_NonZero = 0 dargestellt wird;
    - eine Variable abzulesen, die für den Ruhezustand des Motors (Repos) repräsentativ ist;
    - die Variable Acc_Was_NonZero so zu verarbeiten, dass sie auf "1" bleibt, sobald das Gaspedal gedrückt wurde, und bis die Variable Ruhezustand auf "1" zurückkehrt;

    und dass es dann darin besteht, den "in der Ebene"-Start zu erlauben, wenn die Variable Acc_Was_NonZero den Wert "0" hat, und zu testen, ob die Schätzung eines übertragenen Drehmoments ECT höher als ein Schwellwert ECT_Seuil ist, um das Lösen der automatischen Parkbremse freizugeben und so das Losfahren des Fahrzeugs zu gewährleisten, indem es in einem bestimmten Beschleunigungsbereich gehalten wird.

19. Verfahren nach Anspruch 18, **dadurch gekennzeichnet, dass** es darin besteht, den "in der Ebene"-Startdienst auf einen Bergab-Startdienst mit eingelegtem erstem Gang auszuweiten.

20. Verfahren nach Anspruch 18, **dadurch gekennzeichnet, dass** es darin besteht, den "in der Ebene"-Startdienst auf einen Bergab-Startdienst mit eingelegtem Rückwärtsgang auszuweiten.

21. Verfahren nach einem der vorhergehenden Ansprüche, **dadurch gekennzeichnet, dass** es einen Schritt der Erfassung eines übermäßigen Nickens und einen Schritt zum Verhindern des Lösens der automatischen Parkbremse in einer Startsituation enthält, wenn das Nicken des Fahrzeugs, das zum Beispiel durch eine zu starke Bewegung der Fahrgäste des Fahrzeugs angewendet wird, eine bestimmte vorbestimmte Schwelle überschreitet.

**22.** Verfahren nach einem der vorhergehenden Ansprüche, **dadurch gekennzeichnet, dass** es einen Schritt aufweist, um einen Begriff des Vorgreifens auf den Befehl zum Lösen der automatischen Parkbremse in Abhängigkeit von vorbestimmten Vorgreifwerten zu bestimmen, der bei der Erarbeitung des Befehls zum Lösen der automatischen Parkbremse darin besteht, auch einen Schritt der Messung des Eindrückgrads des Gaspedals Teta_Acc auszuführen, dann eine zeitliche Ableitung des Signals Teta_Acc des Eindrückgrads, d.h. D_Acc, z messen, und diesen augenblicklichen Ableitungswert D_Acc mit einer vorbestimmten Schwelle Seuil_Anticipe zu vergleichen, so dass, wenn die Änderungsgeschwindigkeit des Eindrückgrads D_Acc höher als ein Wert Seuil_Anticipe ist, die Inkrementierungsschleife des Schätzwerts eines übertragenen Drehmoments ECT unterbrochen wird, ehe der Test (33; Figur 2) wahr ist, und um in vorweggenommener Weise den Befehl des Lösens der automatischen Parkbremse zu erzeugen.

**23.** Starthilfevorrichtung beim Bergauf-Start eines Fahrzeugs, das eine Antriebseinheit und eine automatische Parkbremse aufweist, die mit einer Einrichtung (7, 8) ausgestattet ist, um einen Löse- oder Deaktivierungsbefehl der Parkbremse auszuführen, indem das Verfahren nach mindestens einem der vorhergehenden Ansprüche angewendet wird, **dadurch gekennzeichnet, dass** sie einen Rechner (5) eines Lösebefehls, der mit einem Sensor (7) des Gefällegrads, auf dem sich das Fahrzeug befindet, und mit einem Sensor verbunden ist, der eine Information über die Drehzahl oder Rotationsgeschwindigkeit der Antriebseinheit des Fahrzeugs liefert, und **dadurch gekennzeichnet, dass** der Rechner (5) eine Einrichtung zur Schätzung des übertragenen Drehmoments (ECT) aufweist, die mit einem ersten Eingang einer Vergleichseinrichtung verbunden ist, von der ein zweiter Eingang mit einer Einrichtung verbunden ist, um einen Schwellwert eines übertragenen Drehmoments zu erzeugen, der dem Halten des Fahrzeugs entspricht, so dass eine Ausgangsklemme der Vergleichseinrichtung einen Lösebefehl (11) an die elektrische Parkbremse (7, 8) erzeugt.

**24.** Vorrichtung nach Anspruch 23, **dadurch gekennzeichnet, dass** sie aufweist:

• ein erstes Ablesemodul des mittleren wirksamen Drehmoments Cme, das von einem Rechner (3) des Motors in Form einer Information geliefert wird, die auf dem Bus (1) des Fahrzeugs zirkuliert,
• ein zweites Ablesemodul der augenblicklichen Rotationsgeschwindigkeit Wm des Verbrennungsmotors, die vom Rechner des Motors (3) in Form einer Information geliefert wird, die auf dem Bus (1) des Fahrzeugs zirkuliert,

• ein drittes Modul, das es ermöglicht, die zeitliche Ableitung $\dfrac{dWm}{dt}$ der Rotationsgeschwindigkeit am Ausgang der Antriebseinheit ausgehend vom Datenwert der Rotationsgeschwindigkeit oder Motordrehzahl zu berechnen, der vom zweiten Modul entnommen wird;
• ein viertes Modul, um das Produkt eines Werts des Trägheitsmoments Jmot, das für die Trägheit des Motors kennzeichnend ist, sowie des Ausgangswerts des dritten Moduls zu berechnen;
• ein fünftes Modul, um den Ausgangswert des vierten Moduls, der an einem Subtraktionseingang des fünften Moduls präsentiert wird, vom Ausgangswert des ersten Moduls zu subtrahieren, damit an seinem Ausgang ein Augenblickswert der Schätzung eines augenblicklichen übertragenen Drehmoments präsentiert wird, der gemäß einer Beziehung erzeugt wird: $\mathtt{ECT \ = \ Cme \ - \ Jmot \ x} \ \dfrac{dWm}{dt}$ .

**25.** Vorrichtung nach einem der Ansprüche 23 oder 24, **dadurch gekennzeichnet, dass** sie, wenn die Werte des geschätzten Motordrehmoments (Cme) und der Motordrehzahl (Wm) auf Rahmen einer Busleitung (1) durch einen Kontrollrechner des Motors (3) geliefert werden, eine Resynchronisierungsschaltung (67) aufweist.

**26.** Vorrichtung nach Anspruch 25, **dadurch gekennzeichnet, dass** die Resynchronisierungsschaltung (67) aufweist:

- einen Speicher, der eine Tabelle über einen Zyklus von Datenpaaren enthält, so dass die laufende Nummer eines Werts, der für ein erstes Wort repräsentativ ist, das an seinem ersten Eingang empfangen wurde, einer laufenden Nummer eines repräsentativen Werts der laufenden Nummer eines zweiten empfangenen Worts zugeordnet wird,
- Register von aufeinanderfolgenden Wertefolgen des ersten Worts und/oder des zweiten Worts, und
- eine Einrichtung, um in Abhängigkeit von den Zuordnungen laufender Nummern des erwähnten Speichers am Ausgang ein Paar von einem ersten Wort und von einem zweiten Wort entsprechend dem gleichen Rechenmoment anzuwenden, und um das Paar von resynchronisierten Wörtern an Ausgangsklemmen (68, 69) zu präsentieren.

**27.** Vorrichtung nach Anspruch 25 oder 26, **dadurch gekennzeichnet, dass** die Resynchronisierungsschaltung (67) hauptsächlich an der Motordrehzahl arbeitet und es ermöglicht, eine Verschiebung im Mechanismus der Zurverfügungstellung von Wortpaaren (Cme, Wm), einer charakteristischen Wirkung bei der Beschleunigung des Verbrennungsmotors, zu nutzen, und die aufweist:

ein Synchronisationsregister (70) der Schätzung eines übertragenen Drehmoments (Cme);
eine Folgeschaltung (71), die ein Signal (56) empfängt, das den oberen Totpunkt anzeigt, und die Schreib- (72) und Lesebefehle (73) an das Register (70) überträgt;
ein Register (74) eines verfügbaren Schätzwerts des synchronisierten übertragenen Drehmoments;
einen Stapel (76) von Registern, in dem mehrere aufeinanderfolgende Werte der Motordrehzahl (Wm) gehalten werden, die in aufeinanderfolgenden Zeitpunkten auf dem CAN-Bus (1) erfasst wurden;
eine Differentialschaltung (79), die aufweist:

- einen positiven Eingang, der mit einem Leseausgang des Stapels (76) verbunden ist, an dem der älteste Wert der Motordrehzahl Wm verfügbar ist, der im Stapel (76) gehalten wird, und
- einen negativen Eingang, mit dem der neueste Wert der Motordrehzahl verbunden ist, der auch auf der Eingangsklemme (66) des Moduls (67) verfügbar ist;
- einen Eingang (80), der einen repräsentativen Wert "Dauer" der Dauer empfängt, die seit der Erfassung zwischen dem ältesten Wert und dem neuesten Wert vergangen ist, so dass am Ausgang (81) der Differentialschaltung (79) ein Wert verfügbar ist, der für einen synchronisierten Wert der gemittelten zeitlichen Ableitung der Motordrehzahl gemäß einer Beziehung der folgenden Form verfügbar ist:

$$\texttt{D\_Wm}_{\texttt{sync}} \; = \; [\texttt{Wm(8)-Wm(1)}]\texttt{/Dauer;}$$

in ein Register (82) geladen.

**28.** Vorrichtung nach Anspruch 27, **dadurch gekennzeichnet, dass** ein Schreibsteueranschluss des Registers (82), der einen synchronisierten Wert der gemittelten zeitlichen Ableitung der Motordrehzahl hält, mit der Folgeschaltung (71) verbunden ist, die ein Register (86) verwaltet, in dem ein Wert einer zeitlichen Verschiebung oder Verzögerung $\Delta T$ gespeichert ist, der einer gewünschten Verzögerung der Übertragung der synchronisierten Werte an den Rest des Schätzers entspricht, so dass insbesondere berücksichtigt werden kann:

- die Füllzeit des Kollektors des Verbrennungsmotors, und
- die Zündzeit, wenn der Verbrennungsmotor in der Beschleunigungsphase ist, wie es bei einem Bergauf-Start der Fall ist.

**29.** Vorrichtung nach Anspruch 24, **dadurch gekennzeichnet, dass** sie einen Zähler (90) aufweist, der einen digitalen Wert CPTR hält und ihn bei jedem Ereignis aktualisiert, das an seinem "+"-Eingang präsentiert wird, indem er ihn um einen vorbestimmten Wert wie "1" erhöht;
einen Eingang (91), an dem der Wert ECT_k geladen wird, ein Wert während der Inkrementierung der Schätzung eines übertragenen Drehmoments, und der einerseits mit dem Eingang einer Schaltung (93) zur Erfassung der Ankunft eines Werts ECT_k und mit einem ersten Eingang eines Komparators (92) verbunden ist;
der Erfassungsausgang des Moduls (93) zur Ankunftserfassung einer Tastprobe ECT_k mit dem "+"-Eingang der Inkrementierungssteuerung des Zählers (90) verbunden ist, dessen Leseausgangsklemme mit einem ersten Eingang eines Komparators (93) verbunden ist;
ein Register (94), das einen Schwellwert ECTseuil enthält, und an einen zweiten Eingang des Komparators (92) übertragen wird,
der Komparator (92) einen ersten Ausgang (96) und einen zweiten Ausgang (95) aufweist, die zueinander komplementär sind, so dass, wenn der vom Komparator (92) durchgeführte Test positiv ist, der erste Ausgang (96) in den aktiven Zustand übergeht und mit einem ersten Eingang eines UND-Glieds (97) verbunden wird, während der zweite Ausgang (95) in den inaktiven Zustand übergeht und mit einer Eingangsklemme zur Rücksetzung auf einen Anfangswert wie den Wert "0" des Zählers (90) verbunden ist;
einen zweiten Komparator (98), von dem ein erster Eingang den Zählwert CPTR empfängt, der im Zähler (90) verfügbar ist, und von dem ein zweiter Eingang mit einem Register (99) verbunden ist, das den maximalen Zählwert hält, nach dem die Freigabe des Lösens ausgeführt werden kann;
so dass, wenn der vom zweiten Komparator (98) durchgeführte Test positiv ist, sein Ausgang in den aktiven Zustand übergeht und mit einem zweiten Eingang des UND-Glieds (97) verbunden wird, so dass der Ausgang (100) des UND-Glieds (97) in den aktiven Zustand übergeht, um eine Freigabe des Lösens der automatischen Parkbremse anzuzeigen.

30. Vorrichtung nach Anspruch 29, **dadurch gekennzeichnet, dass** sie ein Register (99) aufweist, das einen Wert (Smin_Lop_Delay) enthält, der in Abhängigkeit von der Tastperiode oder Schleifentaktfolge und der gewünschten Zeit oder Verzögerung zwischen der ersten Überschreitung durch den geschätzten Wert eines übertragenen Drehmoments ECT des Schwellwerts $ECT_{seuil}$ und der Durchführung des Lösebefehls der Parkbremse FPA bestimmt wird, wobei das Register (99) eine Schreibeinrichtung eines so bestimmten Werts von Smin_Lop_Delay aufweist, die bei der Initialisierung des Fahrzeugs oder bei seiner Herstellung oder bei seiner Wartung mit Hilfe eines dem Fachmann bekannten Produktionswerkzeugs, oder auch bei der Erfassung eines Fahrertyps aktiviert wird, die mit Hilfe des Bordrechners durchgeführt wird, der über den Bus (1) einen dem Fahrer zugeordneten charakteristischen Wert von Smin_Lop_Delay überträgt, der zum Beispiel mit Hilfe des Startschlüssels oder des Fahrertyps gemäß einem Erfassungsalgorithmus der vom Fahrer durchgeführten Fahrweise erfasst wird.

31. Vorrichtung nach Anspruch 30, **dadurch gekennzeichnet, dass**, mit Hilfe eines Addierers, der den Vorgang: ECT_Corr_k = ECT_K+g(Verbraucher) ausführt, der an der Klemme (91) empfangene Schätzwert eines übertragenen Drehmoments ECT zusätzlich eine vorbestimmte Verschiebung empfängt, um die Störwirkung des Einschaltens und des Ausschaltens bestimmter Sekundär-Verbraucher von Energie oder Leistung zu reduzieren, die vom Verbrennungsmotor geliefert wird, Verschiebung, die vor der Erfassungsschaltung (91) und vor dem Eingang des Komparators (92) durchgeführt wird.

32. Vorrichtung nach Anspruch 31, **dadurch gekennzeichnet, dass** sie eine Schaltung aufweist, um eine Verschiebung gemäß dem Leerlauf- oder Last-Drehzahlzustand auszuführen.

33. Vorrichtung nach einem der Ansprüche 23 bis 32, **dadurch gekennzeichnet, dass** sie eine Schaltung (150-172) aufweist, um die Aktivität des Fahrers mit Hilfe von zwei Komparatoren (151, 152) der zeitlichen Ableitung (D_Acc) des Eindrückgrads des Gaspedals mit einem Eindrückgrad-Intervall (SMIN_D_Acc_Takeoff, SMAX_D_Acc_Takeoff) in zwei Registern (153, 154) und mit Hilfe eines UND-Glieds (156) zu erfassen, um den Lösebefehl der automatischen Parkbremse zu validieren.

34. Vorrichtung nach einem der Ansprüche 23 bis 33, **dadurch gekennzeichnet, dass** sie eine Schaltung (160-172) aufweist, um den eingekuppelten oder nicht eingekuppelten Zustand der Antriebseinheit mit Hilfe von mehreren Kennfeldern (163, 164) zu erfassen, die eine Folge von Schätzwerten eines übertragenen Drehmoments (ECT) in Abhängigkeit vom Eindrückgrad des Gaspedals enthalten, die je nachdem, ob die Kupplung aktiv ist oder nicht, mit Hilfe eines UND-Glieds (171) erstellt werden, um die Erzeugung des Befehls zum Lösen der automatischen Parkbremse in Abhängigkeit vom Fahrertyp, vom Eindrückgrad des Gaspedals (TETA_Acc) und von der Schätzung eines übertragenen Drehmoments (ECT) zu validieren, wobei ein UND-Glied (171) den Befehl zum Lösen der automatischen Parkbremse validiert.

35. Vorrichtung nach einem der Ansprüche 23 bis 34, **dadurch gekennzeichnet, dass** sie eine Schaltung (180-195) aufweist, um den Leerlaufzustand des Fahrzeugs in Rotationsrichtung zu erfassen, die zwei Generatoren (181, 182) einer Funktion aufweist, die die Leerlauf-Motordrehzahl bestimmt, verbunden mit zwei Komparatoren (190, 191) des augenblicklichen Werts der Motordrehzahl (Wm) und von zwei UND-Gliedern (192,193), um einen Befehl des Lösens der automatischen Parkbremse zu validieren.

36. Vorrichtung nach einem der Ansprüche 23 bis 35, **dadurch gekennzeichnet, dass** sie eine Schaltung (200-206) aufweist, um einen Sättigungszustand des Verbrennungsmotors zu bestimmen, die einen Komparator (201) aufweist, um die Motordrehzahl (Wm) zu bestimmen und um einen in einer Korrektureinrichtung (202, 203) von Werten eines geschätzten Motordrehmoments (Cme) korrigierten Wert anzuwenden oder nicht.

37. Vorrichtung nach einem der Ansprüche 23 bis 36, **dadurch gekennzeichnet, dass** sie eine Schaltung aufweist, um einen "in der Ebene"-Startdienst anzuwenden, die hauptsächlich aufweist:

    - eine Schaltung, um den in der Ebene-Startdienst bei der Konfiguration des Fahrzeugs während der Herstellung, bei der Wartung oder bei Erfassung des Fahrertyps oder des Fahrers, wenn letzterer im Fahrzeug Platz nimmt, zu aktivieren, die ein logisches Signal auf "0" erzeugt, wenn der Betrieb nicht implementiert wird, und auf "1" erzeugt, wenn der Dienst implementiert wird;

- eine Schaltung zur Erfassung der "in der Ebene"-Situation, um zu erfassen, dass das Signal, das für den vom Neigungswinkelsensor (7) erzeugten Neigungswinkel repräsentativ ist, im Absolutwert unter einem Schwellwert liegt, der in einem geeigneten Register gespeichert und für die Grenze der Situation "in der Ebene" repräsentativ ist;

- ein erstes UND-Glied, um die Ausgangssignale der Schaltung zur Aktivierung des in der Ebene-Startdiensts und der Schaltung zur Erfassung einer "in der Ebene"-Situation zu kombinieren;

- eine Schaltung, um die Variable Acc_Was_NonZero zu erarbeiten, die einen Komparator des Eindrückgrads des Gaspedals mit einer vorbestimmten sehr geringen Eindrückschwelle und eine Schaltung zur Nullrücksetzung aufweist, sobald die Variable Ruhezustand, die vom Rest der Startvorrichtung der Erfindung stammt, auf "0" zurückkehrt;

- eine Schaltung, um den Wert der Schätzung eines übertragenen Drehmoments ECT, die vom Rest der Startvorrichtung der Erfindung stammt, auf einem Schwellwert ECTSeuil zu testen, und um einen Befehl zum Lösen der automatischen Parkbremse zu erzeugen;

- ein zweites UND-Glied, um den von der Schaltung stammenden "in der Ebene"-Lösebefehl zu kombinieren, um den Wert der Schätzung eines übertragenen Drehmoments ECT am Ausgang des ersten UND-Glieds zu testen, und deren Ausgang mit dem Controller des Elektromotors der automatischen Parkbremse verbunden ist.

**38.** Vorrichtung nach einem der Ansprüche 23 bis 37, **dadurch gekennzeichnet, dass** sie eine Schaltung aufweist, um einen Bergab-Startdienst mit eingelegtem erstem Gang durchzuführen, die aufweist:

- eine Schaltung, um den Startdienst "Bergab, erster Gang eingelegt" bei der Konfiguration des Fahrzeugs bei der Herstellung, bei der Wartung oder bei der Erfassung des Fahrertyps oder des Fahrers, wenn letzterer im Fahrzeug Platz nimmt, zu aktivieren, die ein logisches Signal auf "0" erzeugt, wenn der Dienst nicht implementiert wird, und auf "1" erzeugt, wenn der Dienst implementiert wird;

- eine Erfassungsschaltung einer Situation "Bergab, erster Gang eingelegt", um zu erfassen, dass das Signal, das für den Neigungswinkel repräsentativ ist, der vom Neigungswinkelsensor (7) erzeugt wird, unter einem negativen Schwellwert liegt, der in einem geeigneten Register gespeichert und für die Grenze der Situation "Bergab, erster Gang eingelegt" repräsentativ ist;

- ein drittes UND-Glied, um die Ausgangssignale der Schaltung, um den Startdienst "Bergab, erster Gang eingelegt" zu aktivieren, und der Erfassungsschaltung der Situation "Bergab, erster Gang eingelegt" zu kombinieren;

- ein viertes UND-Glied, um den Ausgang des dritten UND-Glieds und den Ausgang der Schaltung zum Testen des Schätzwerts eines übertragenen Drehmoments ECT, der vom Rest der Startvorrichtung der Erfindung stammt, mit einem Schwellwert ECTSeuil, und zum Erzeugen eines Befehls des Lösens der automatischen Parkbremse der Situation "Bergab, erster Gang eingelegt", zu kombinieren.

**39.** Vorrichtung nach einem der Ansprüche 23 bis 38, **dadurch gekennzeichnet, dass** sie eine Schaltung aufweist, um einen Bergab-Startdienst "im Rückwärtsgang" durchzuführen, die aufweist:

- eine Schaltung, um den Startdienst "Bergab, Rückwärtsgang eingelegt", bei der Konfiguration des Fahrzeugs bei der Herstellung, bei der Wartung oder bei der Erfassung des Fahrertyps oder des Fahrers, wenn letzterer im Fahrzeug Platz nimmt, zu aktivieren, die ein logisches Signal "0" erzeugt, wenn der Dienst nicht implementiert wird, und "1", wenn der Dienst implementiert wird;

- eine Schaltung der Situationserfassung "Bergab, Rückwärtsgang eingelegt", um zu erfassen, dass das Signal, das für den Neigungswinkel repräsentativ ist, der vom Neigungswinkelsensor (7) erzeugt wird, höher ist als ein positiver Schwellwert, der in einem geeigneten Register gespeichert und für die Grenze der Situation "Bergab, Rückwärtsgang eingelegt" repräsentativ ist;

- ein drittes UND-Glied, um die Ausgangssignale der Schaltung zum Aktivieren des Startdiensts "Bergab, Rückwärtsgang eingelegt" und der Schaltung zur Erfassung der Situation "Bergab, Rückwärtsgang eingelegt" zu kombinieren;

- ein viertes UND-Glied, um den Ausgang des dritten UND-Glieds und den Ausgang der Schaltung zum Testen des Schätzwerts eines übertragenen Drehmoments ECT, der vom Rest der Startvorrichtung der Erfindung stammt, mit einem Schwellwert ECTSeuil, und zum Erzeugen eines Befehls des Lösens der automatischen Parkbremse der Situation "Bergab, Rückwärtsgang eingelegt" zu kombinieren.

**40.** Vorrichtung nach einem der Ansprüche 23 bis 39, **dadurch gekennzeichnet, dass** sie eine Schaltung aufweist, um ein übermäßiges Nicken zu erfassen, deren Ausgang aktiv ist, wenn das übermäßige Nicken eine vorbestimmte Schwelle in einem Register überschreitet, wobei der Ausgang der Schaltung zur Erfassung eines übermäßigen Nickens durch einen ersten invertierenden Eingang eines UND-Glieds kombiniert ist, von dem ein anderer Eingang mit dem Ausgang der oben beschriebenen Vorrichtung verbunden ist, in der sich der Lösebefehl der automatischen Parkbremse befindet, und der Ausgang des UND-Glieds den Lösebefehl der automatischen Parkbremse außerhalb eines übermäßigen Nickens erzeugt.

41. Vorrichtung nach Anspruch 40, **dadurch gekennzeichnet, dass** die Schaltung zur Erfassung eines übermäßigen Nickens eine Eingangsklemme aufweist, die ein vom Neigungswinkelsensor (7) erzeugtes Signal empfängt, das eine ausreichende Auflösung aufweist, um ein übermäßiges Nicken zu erfassen, das an den Eingang einer Schaltung übertragen wird, um ein Signal zu erzeugen, das für die zeitliche Ableitung des Erfassungssignals des Neigungswinkels repräsentativ ist, deren Ausgang mit einem Eingang eines Komparators verbunden ist, dessen anderer Eingang mit einem Register verbunden ist, das einen Schwellwert übermäßigen Nickens hält, wobei der Ausgang des Komparators aktiv ist, wenn die Ableitung des für den Neigungswinkel des Sensors (7) repräsentativen Signals über der vorbestimmten Schwelle liegt.

42. Vorrichtung nach Anspruch 41, **dadurch gekennzeichnet, dass** sie einen Generator von Schwellwerten übermäßigen Nickens in Abhängigkeit von dem vom Sensor (7) erzeugten Neigungswinkel aufweist, um den Schwellwert übermäßigen Nickens zu erzeugen.

43. Vorrichtung nach Anspruch 42, **dadurch gekennzeichnet, dass** der Generator von Schwellwerten übermäßigen Nickens eine erste Reihe von Schwellwerten in einer ersten Startrichtung und eine zweite Reihe von Schwellwerten in einer zweiten Startrichtung aufweist.

44. Vorrichtung nach einem der Ansprüche 23 bis 43, **dadurch gekennzeichnet, dass** sie eine Schaltung aufweist, um einen Dienst des Vorgreifens auf die Dynamik des Starts zu erbringen, die eine Schaltung aufweist, um die zeitliche Ableitung D_Acc des Signals Teta_Acc des Eindrückgrads zu berechnen, der vom Neigungswinkelsensor (7; Figur 1) geliefert wird, verbunden mit einem ersten Eingang eines Komparators, dessen anderer Eingang mit einem Generator eines vorbestimmten Werts eines Werts Seuil_Anticipe verbunden ist, so dass sein Ausgang aktiv ist, wenn der Wert Seuil_Anticipe überschritten wird, dessen Ausgangssignal des Komparators dann an einen ersten Eingang eines anderen UND-Glieds übertragen wird, dessen zweiter Eingang mit einer Schaltung verbunden ist, um zu erfassen, dass die Schätzung eines übertragenen Drehmoments ECT gerade inkrementiert wird, zum Beispiel, indem die Entwicklung des Zählers CPTR (83; Figur 6) erfasst wird, und das Ausgangssignal des anderen UND-Glieds dann als vorweggenommener Befehl zum Lösen der automatischen Parkbremse verwendet wird.

45. Vorrichtung nach Anspruch 44, **dadurch gekennzeichnet, dass** sie auch einen Generator einer vorbestimmten Schwelle Seuil_Anticipe in Form einer Tabelle von Schwellwerten aufweist, die vom Wert des vom Neigungswinkelsensor (7) gemessenen Neigungsgrads angesteuert wird, wobei der Wert Seuil_Anticipe dann an den erwähnten Komparator übertragen wird.

46. Vorrichtung nach einem der Ansprüche 23 bis 45, **dadurch gekennzeichnet, dass** sie auch eine Schaltung aufweist, um die Reaktionszeit der automatischen Parkbremse und die Dynamik des Fahrers zu berücksichtigen, indem ein Vorgreifen auf die oder eine Vorhersage (ECT_prédit) der Schätzung eines übertragenen Drehmoment (ECT) ausgeführt wird, die aufweist:

   - einen Vorhersage-Operator, um eine Operation der Form:

$$ECT\_prédit(Tr) = ECT + Tr \times (d/dt).ECT$$

   auszuführen, in der Tr ein charakteristischer Wert der Reaktionszeit des elektromechanischen Systems und die zeitliche Ableitung ((d/dt).ECT) über die Schätzung eines übertragenen Drehmoments eine Schätzung der Dynamik des Fahrers ist;
   - einen Test-Operator der Vorhersage über die Schätzung eines übertragenen Drehmoment (ECT_prédit) auf mindestens einer Schwelle (S_min_prédit und/oder S_max_prédit) des Lösetests mit vorbestimmtem Vorgreifen, gespeichert und/oder kalibrierbar in einem Speicher, so dass ein vorweggenommener Befehl des Lösens der automatischen Parkbremse erzeugt wird, wenn der Test-Operator aktiviert ist.

47. Vorrichtung nach einem der Ansprüche 23 bis 46, **dadurch gekennzeichnet, dass** sie einen Prozessor aufweist, der eine Software-Architektur in vier Blöcken aufweist:

- einem Block der Erfassung der Eingangsdaten, darunter die Motordrehzahl Wm, die Geschwindigkeit des Fahrzeugs Vv, der Neigungswinkel, das geschätzte mittlere Drehmoment Cme, der Eindrückgrad des Gaspedals TETA_Acc, die insbesondere vom CAN-Bus (1) entnommen werden;
- einem Block der Signalverarbeitung, die an die Eingangsdaten angewendet wird, der insbesondere digitale Filterungen an allen oder einem Teil der Eingangsdaten durchführt und Skalen- oder Einheitskorrekturen durchführt;
- einem Block der Initialisierung der Parameter des erfindungsgemäßen Verfahrens, der insbesondere die Schwellwerte und die Initialisierungen der Zähler aufweist;
- einem Block der Ausführung des Verfahrens nach einem der Ansprüche 1 bis 22, um einen Befehl des Lösens der automatischen Parkbremse zu erzeugen.

**Fig. 1**

**Fig. 2**

#T      #T+1

41      42      40

$Cme_T$ —   $Wm_T$    $Cme_{T+1}$   $Wm_{T+1}$

T2

T1

**Fig. 3**

$t_{PMH}$ → **Calcul de Cme** 50

52 **Calcul de Wm** ← $t_{PMH}$

55 **Capteur PMH** ← **Moteur** 54

51 **Ecriture sur le bus CAN**

56 → $t_{PMH}$

1

53   59 **CTRL CAN** ← **Ecriture sur le bus CAN** 57

58

63   64 **Registre Cme'$_S$** 61 → **Registre Wm'$_S$** 62

60

65    66

67 **Resynchronisateur CAN** ← $t_{PMH}$ 56

**Fig. 4**

68      69

**Fig. 5**

**Fig. 6**

Fig. 7

Fig. 8

EP 1 513 714 B1

Fig. 9

Fig. 10

48

162

(a)

Détection ID conducteur

165

166

160

theta_Acc

—163—

—164—

169

170

161

167

168

171    172

ECT

ET    DESS

ECT    (C2)

(b)

S2

(C1)

Fig. 11

S0    S1    Theta_Acc

**Fig. 12**

**Fig. 13**

**RÉFÉRENCES CITÉES DANS LA DESCRIPTION**

**Documents brevets cités dans la description**

- WO 8901887 A